(19) Europäisches Patentamt
European Patent Office
Office européen des brevets

(11) **EP 2 860 380 B1**

(12) **EUROPEAN PATENT SPECIFICATION**

(45) Date of publication and mention
of the grant of the patent:
**11.10.2017 Bulletin 2017/41**

(21) Application number: **12878457.6**

(22) Date of filing: **08.06.2012**

(51) Int Cl.:
*F02D 35/02* (2006.01)   *F02D 41/04* (2006.01)
*F02D 41/22* (2006.01)   *F02D 41/40* (2006.01)
*F02D 45/00* (2006.01)   *F02D 41/14* (2006.01)

(86) International application number:
**PCT/JP2012/064802**

(87) International publication number:
**WO 2013/183163 (12.12.2013 Gazette 2013/50)**

(54) **DEVICE FOR DIAGNOSING COMBUSTION STATES IN INTERNAL COMBUSTION ENGINES**

VORRICHTUNG ZUR DIAGNOSE VON VERBRENNUNGSZUSTÄNDEN BEI VERBRENNUNGSMOTOREN

DISPOSITIF POUR DIAGNOSTIQUER DES ÉTATS DE COMBUSTION DANS DES MOTEURS À COMBUSTION INTERNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.04.2015 Bulletin 2015/16**

(73) Proprietor: **Toyota Jidosha Kabushiki Kaisha Toyota-shi, Aichi 471-8571 (JP)**

(72) Inventor: **NADA Mitsuhiro**
**Toyota-shi**
**Aichi 471-8571 (JP)**

(74) Representative: **D Young & Co LLP**
**120 Holborn**
**London EC1N 2DY (GB)**

(56) References cited:
**EP-A1- 1 936 156      EP-A2- 0 937 883**
**WO-A2-2011/008706   JP-A- 2009 185 628**
**JP-A- 2012 057 471    JP-B2- 3 383 874**
**US-A1- 2010 071 662**

- **John B. Heywood: "Internal Combustion Engine Fundamentals" In: "INTERNAL COMBUSTION ENGINE FUNDAMENTALS.", 1 January 1988 (1988-01-01), NEW YORK, MCGRAW-HILL., US 022039, XP055218687, ISBN: 978-0-07-100499-2 pages 504-507, * the whole document ***

## Description

[Technical Field]

The present invention relates to an apparatus to diagnose a combustion state (oxidation reaction and the like) of fuel in a cylinder of an internal combustion engine typified by a diesel engine.

[Background Art]

Conventionally, as there has been known, in diesel engines used as an automobile engine and the like (hereinafter, merely referred to as "engine"), complicated control is performed in such a manner that engine characteristics such as exhaust gas characteristics, fuel consumption characteristics, combustion stability, and power performance meet various requirements.

Specifically, an adaptive value of each control parameter such as an optimal fuel injection amount corresponding to an engine operating state determined based on a revolution speed or load of the engine is obtained based on experiment or simulation, a control map is produced, and the control map is stored in an electronic control unit (engine ECU) for engine control. Then, the engine ECU performs the control of the engine while the adaptive value on the control map is referred.

Also, when each control parameter is corrected in accordance with the engine operating state, it is desirable that a reaction state of the fuel in the cylinder (for example, ignition time of the fuel and the like) is recognized, and each control parameter is corrected accordingly in such a manner as to obtain a desired reaction state.

In Patent Literature 1 described below, considering that the ignition time of the fuel affects characteristics such as exhaust emission, combustion noise, and fuel consumption, it is disclosed that the ignition time of the fuel in a combustion chamber is calculated by use of Arrhenius's reaction formula. Specifically, a reference fuel injection time is set based on an in-cylinder temperature, and an ignition delay period of a case where the fuel injection is performed in the reference fuel injection time is obtained by a physical ignition delay time obtained based on experiment and the like and a chemical ignition delay time calculated by Arrhenius's reaction formula. Then, when the ignition time obtained by the ignition delay period is deviated with respect to a target ignition time, the fuel injection time is corrected in such a manner as to resolve the deviation.

[Citation List]

[Patent Literature]

[Patent Literature 1] JP 2008-101591A

[Summary of Invention]

[Technical Problem]

However, Arrhenius's reaction formula described above is targeted for a reaction in a constant temperature field in which it is assumed that there is no temperature change in the cylinder. That is, the combustion state of the fuel is assumed under temperature management in which a time point when the in-cylinder temperature reaches a predetermined temperature is considered the ignition time of the fuel. Accordingly, when the control parameter is corrected while the ignition time of the fuel is assumed by Arrhenius's reaction formula disclosed in the Patent Literature 1, there is a limit in that the fuel reaction is brought near to an ideal reaction corresponding to ever-changing in-cylinder environments. As a result, for example, there is a possibility of falling into a situation that, notwithstanding that the deviation of an actual reaction state with respect to the ideal reaction state is increased, and a state occurs where abnormality in the reaction should be determined, but the abnormality cannot be recognized. EP1936156 A1 describes a diagnosis technique based on heat generation rate waveforms.

The inventor of the present invention focuses on that, when fuel is injected into the cylinder, a plurality of reactions (low-temperature oxidation reaction, high-temperature oxidation reaction, and the like) regarding the fuel are conducted in accordance with the in-cylinder environments. Then, it has been found that it is possible to diagnose the fuel reaction with high accuracy by separately handling the reaction forms and performing the diagnosis on each reaction form, which leads to the present invention.

The present invention has been achieved in view of the above circumstances to solve the technical problems, and it is an object of the present invention to provide a combustion state diagnostic apparatus of an internal combustion engine, which enables the diagnosis (diagnosis of combustion states) with respect to respective reaction forms of fuel in the cylinders of the internal combustion engine.

[Solution to Problem]

-Principle of solution to the invention-

The principle of solution of the present invention to achieve the above object is such that an ideal heat generation rate waveform model is produced in accordance with in-cylinder environment and a fuel amount, with regard to respective reaction forms (a gasification reaction, a low-temperature oxidation reaction, a thermal decomposition reaction, a high-temperature oxidation reaction, and the like) of fuel injected into the cylinders, and the ideal heat generation rate waveform model of each reaction form or an ideal heat generation rate waveform obtained from the ideal heat generation rate waveform model of each reaction form is compared with a heat generation rate waveform (actual heat generation rate waveform) of an actual reaction in the cylinder, and the diagnosis on each reaction form of the fuel in the cylinder is separately performed based on the deviation.

-Solution Means-

Specifically, the present invention is targeted for an apparatus configured to diagnose a combustion state of fuel in a compression self-igniting internal combustion engine that is configured to carry out combustion by self-ignition of the fuel injected from a fuel injection valve into a cylinder. Regarding the combustion state diagnostic apparatus, it is configured that a reaction velocity, a reaction amount, and a reaction period of a respective plurality of reactions of the fuel injected into the cylinder are calculated in accordance with an in-cylinder environment, and an ideal heat generation rate waveform model or an ideal heat generation rate waveform with regard to each reaction is respectively obtained, and the ideal heat generation rate waveform model or the ideal heat generation rate waveform is respectively compared with an actual heat generation rate waveform of a case where the fuel is actually reacted in the cylinder, with regard to each reaction, and when there exists a reaction in which deviation of the actual heat generation rate waveform with respect to the ideal heat generation rate waveform model or the ideal heat generation rate waveform is equal to or higher than a predetermined amount, it is diagnosed that abnormality occurs in the reaction.

It is noted that "abnormality of reaction" above is not limited to the reaction abnormality (failure of apparatuses and the like) to some extent that leads to failure in the operation of the internal combustion engine, but includes a case where the deviation occurs in the heat generation rate waveform to the extent that enables a correction (or learning) of the control parameter of the internal combustion engine (for example, the correction for keeping the exhaust emission or combustion noise within the scope of regulations can be performed).

According to these particular matters, when the actual heat generation rate waveform is deviated from the ideal heat generation rate waveform (or the ideal heat generation rate waveform model) by the predetermined amount or more regarding the respective plurality of reactions (reaction forms) of the fuel, it is diagnosed that abnormality occurs in the reaction. That is, each reaction of the fuel has a different characteristic (reaction start temperature, reaction velocity, and the like) from each other respectively, so that a reaction in which the abnormality occurs can be identified with high accuracy by comparing the ideal characteristic with the characteristic of the actual heat generation rate waveform actually obtained (actually measured) respectively. Accordingly, an improvement of accuracy of diagnosis can be achieved, compared with a conventional technology in which the combustion state is assumed by Arrhenius's reaction formula, which is targeted for a reaction on assumption that a constant temperature field exists. Then, remedial measures (for example, correction of control parameters of the internal combustion engine) are taken for the reaction form that is diagnosed as having abnormality, so that it is possible to select a control parameter suitable for the reaction form that is diagnosed as having abnormality and correct the control parameter. Consequently, controllability of the internal combustion engine can be substantially improved.

According to the invention, the respective plurality of reactions of the fuel are cited as a gasification reaction, a low-temperature oxidation reaction, a thermal decomposition reaction, and a high-temperature oxidation reaction. Then, in each of the respective reactions, it is configured to compare the ideal heat generation rate waveform model or the ideal heat generation rate waveform with the actual heat generation rate waveform and diagnose the abnormality of the reaction.

Thus, the ideal heat generation rate waveforms (or the ideal heat generation rate waveform model) are respectively obtained in response to the gasification reaction, the low-temperature oxidation reaction, the thermal decomposition reaction, and the high-temperature oxidation reaction, and the ideal heat generation rate waveform (or the ideal heat generation rate waveform model) and the actual heat generation rate waveform are compared, thereby making it possible to determine whether the abnormality occurs in any of the reactions. For example, the gasification reaction and the thermal decomposition reaction are endothermic reactions (there is a case where the thermal decomposition reaction is a heat generation reaction), and each reaction is diagnosed while it is diagnosed whether or not abnormality occurs in the reaction velocity, the reaction amount, and the reaction period thereof, regarding the endothermic reactions. Accordingly, the improvement of the accuracy of diagnosis can be achieved.

The method of calculating the reaction velocity, the reaction amount, and the reaction period in order to obtain the ideal heat generation rate waveforms or the ideal heat generation rate waveform model is specifically cited as follows. First, a reaction start temperature is set as a reaction starting point of each of the respective reactions, and a time point when an in-cylinder temperature reaches the reaction start temperature is set as a start time of the reaction.

Then, the reaction velocity is calculated based on a reference reaction velocity efficiency and a fuel amount corresponding to the reaction start temperature at the start time of the reaction. Also, the reaction amount is calculated based on a reference reaction amount efficiency and the fuel amount corresponding to the reaction start temperature. Furthermore, the reaction period is calculated based on the reaction velocity and the reaction amount.

Herein, the reference reaction velocity efficiency corresponds to a velocity gradient of the amount of heat generated per unit fuel. For example, the reaction velocity is calculated by multiplying the reference reaction velocity efficiency by the fuel amount (effective fuel amount used for the reaction). Also, the reference reaction amount efficiency corresponds to the amount of heat generated per unit fuel. For example, the reaction amount is calculated by multiplying the reference reaction amount efficiency by the fuel amount (effective fuel amount used for the reaction).

In order to enhance the accuracy of calculation of the reaction velocity, it is cited that the reaction velocity is calculated by multiplying a reference reaction velocity, which is obtained by multiplying the reference reaction velocity efficiency by the fuel amount, by a revolution speed correction coefficient corresponding to an engine revolution speed. Also, the revolution speed correction coefficient is given by (reference revolution speed / actual revolution speed)$^2$.

Accordingly, the reaction velocity can be obtained as a value depending on time even when gas composition or the like in the cylinder is changed, and the accuracy of calculation of the reaction velocity can be enhanced.

Also, the actual heat generation rate waveform is obtained based on in-cylinder pressure detected by an in-cylinder pressure sensor.

According to the invention, the procedure of the production of the ideal heat generation rate waveform model and the ideal heat generation rate waveform is cited as follows. First, the ideal heat generation rate waveform model is produced by being approximated as a triangle in which the start time of each reaction is provided as a reference point, and a gradient of an oblique side represents the reaction velocity, and an area represents the reaction amount, and a length of a base represents the reaction period.

Also, the ideal heat generation rate waveform is produced based on the ideal heat generation rate waveform model made up of a triangle, in which the start time of each reaction is provided as a reference point, and a gradient of an oblique side represents the reaction velocity, and an area represents the reaction amount, and a length of the base represents the reaction period, and produced by smoothing the ideal heat generation rate waveform model of each reaction by means of filter processing.

Thus, the ideal heat generation rate waveform model is produced by being approximated as the triangle, whereby the simplification of arithmetic processing for the production can be achieved, and load on an arithmetic operation means of the ECU and the like can be alleviated.

Also, it is cited that the high-temperature oxidation reaction is separated into a high-temperature oxidation reaction by premixed combustion and a high-temperature oxidation reaction by diffusion combustion, both of which are diagnosed in terms of abnormality. Specifically, it is configured that the high-temperature oxidation reaction is separated into the high-temperature oxidation reaction by premixed combustion and the high-temperature oxidation reaction by diffusion combustion in accordance with the reaction velocity, and the ideal heat generation rate waveform model or the ideal heat generation rate waveform is compared with the actual heat generation rate waveform, with regard to the high-temperature oxidation reaction by the premixed combustion and the high-temperature oxidation reaction by the diffusion combustion respectively, thereby performing the diagnosis on the abnormality of the reaction.

It is noted that the high-temperature oxidation reaction by premixed combustion is the rate controlling of the fuel injection amount, and the high-temperature oxidation reaction by diffusion combustion is the rate controlling of the injection rate waveform.

Not according to the invention, it is cited that an order of priority of a condition that a reaction state of the fuel is determined is set high as a degree of freedom of control is reduced. The order of priority is placed in an order of the in-cylinder temperature, an amount of oxygen in the cylinder, and an in-cylinder fuel amount.

For example, the in-cylinder temperature depends on the reaction start temperature, a compression gas temperature (which fluctuates in response to an intake temperature), a preheating amount (which fluctuates in response to the fuel injection amount and the like). Also, the amount of oxygen in the cylinder depends on a supercharging ratio of the intake or an EGR ratio.

According to the invention, the specific operation in the case where it is diagnosed that the abnormality occurs in the reaction is cited as follows. That is, in a case where there exists the reaction in which the deviation of the actual heat generation rate waveform with respect to the ideal heat generation rate waveform model or the ideal heat generation rate waveform is equal to or higher than a predetermined abnormality determining deviation amount, and it is diagnosed that abnormality occurs in the reaction, when the deviation of the actual heat generation rate waveform with respect to the ideal heat generation rate waveform model or the ideal heat generation rate waveform is equal to or lower than a predetermined correction possibility deviation amount, a control parameter of the internal combustion engine is corrected, thereby performing control that the deviation is reduced less than the abnormality determining deviation amount, in contrast, when the deviation of the actual heat generation rate waveform with respect to the ideal heat generation rate waveform model or the ideal heat generation rate waveform exceeds the correction possibility deviation amount, it is diagnosed that failure occurs in the internal combustion engine.

Thus, when it is diagnosed that the abnormality occurs in the reaction, it is determined whether or not the abnormality can be resolved based on the deviation amount of the actual heat generation rate waveform with respect to the ideal heat generation rate waveform model or the ideal heat generation rate waveform. Accordingly, this makes it possible to precisely discriminate a state where a normal reaction state is obtained by means of the correction of the control parameter from a state where maintenance such as replacement of components is required.

The amount of oxygen in the cylinder and the in-cylinder fuel amount are cited as the control parameters of the case where the control parameter of the internal combustion engine is corrected, and the control that the deviation is reduced less than the abnormality determining deviation amount is performed. The amount of oxygen in the cylinder is determined by oxygen density and can be adjusted based on the EGR ratio, the supercharging ratio of the intake or the like. Also, the in-cylinder fuel amount is determined by fuel density and can be adjusted based on the fuel injection time, the fuel injection pressure, or the fuel injection amount. In contrast, as one example of the case where failure occurs in the internal combustion engine, when the deviation of the actual heat generation rate waveform exceeds the correction possibility deviation amount, in this case, it means that the correction amount of the control parameter of the internal combustion engine exceeds a predetermined guard value, whereby it can be diagnosed that the failure occurs in the internal combustion engine. Specifically, when respective lower values of the in-cylinder temperature, the oxygen density, and the fuel density are set in advance, and any of the in-cylinder temperature, the oxygen density, and the fuel density is less than its lower value, it is determined that the correction amount of the control parameter of the internal combustion engine exceeds the predetermined guard value, and it is diagnosed that the failure occurs in the internal combustion engine.

The mode of use of the combustion state diagnostic apparatus of the internal combustion engine is specifically cited as mounting on a vehicle or installation in an experimental apparatus.

[Advantageous Effects of Invention]

According to the present invention, the diagnosis on abnormality is performed for the respective plurality of reaction forms of fuel, thereby achieving the improvement of accuracy in terms of the diagnosis. Also, the reaction form inclusive of abnormality can be identified, so that the control of improving the abnormality can be appropriately performed.

[Brief Description of Drawings]

[Fig. 1]

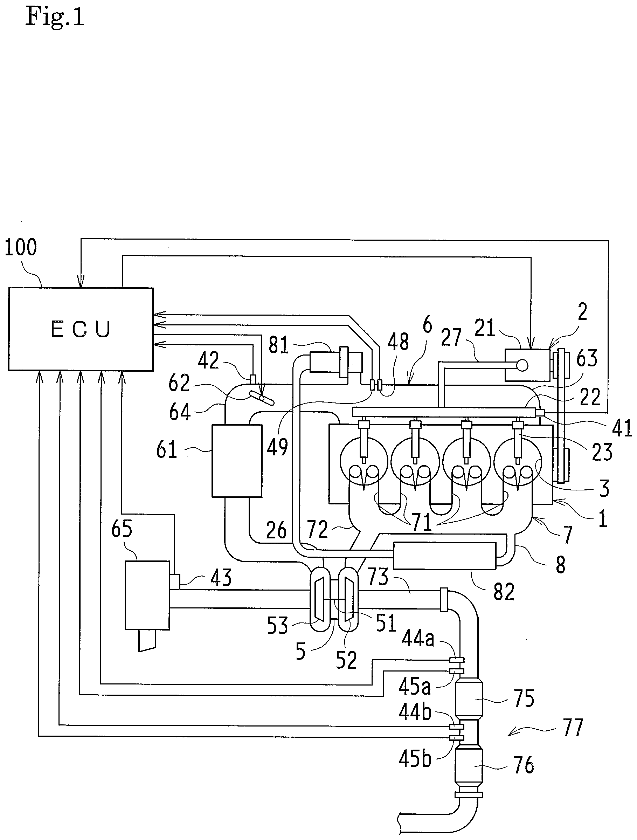

Fig. 1 is a schematic configuration view of an engine and a control system for the same according to the present embodiment.
[Fig. 2]

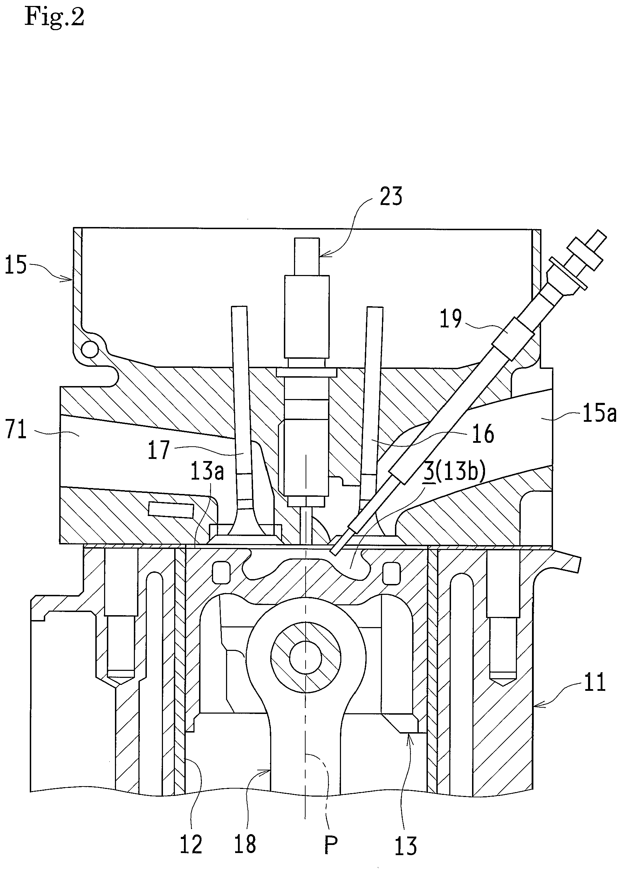

Fig. 2 is a cross-sectional view of a combustion chamber of a diesel engine and peripherals for the same.
[Fig. 3]

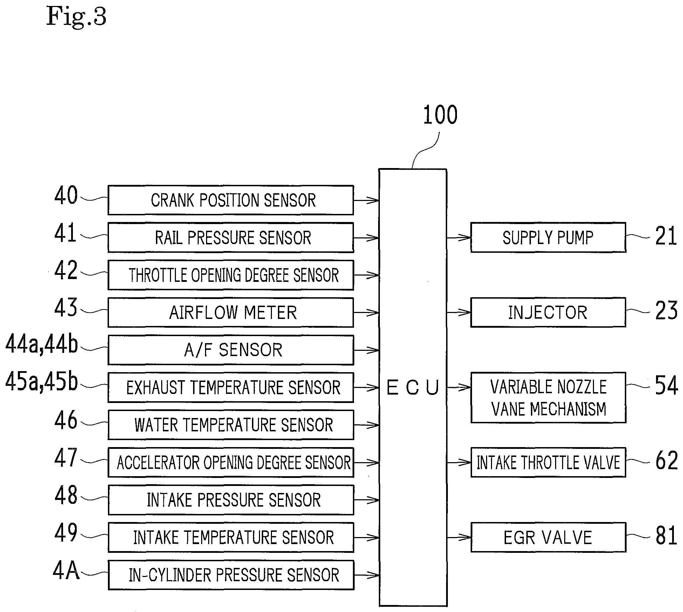

Fig. 3 is a block diagram illustrating a configuration of a control system such as an ECU.
[Fig. 4]

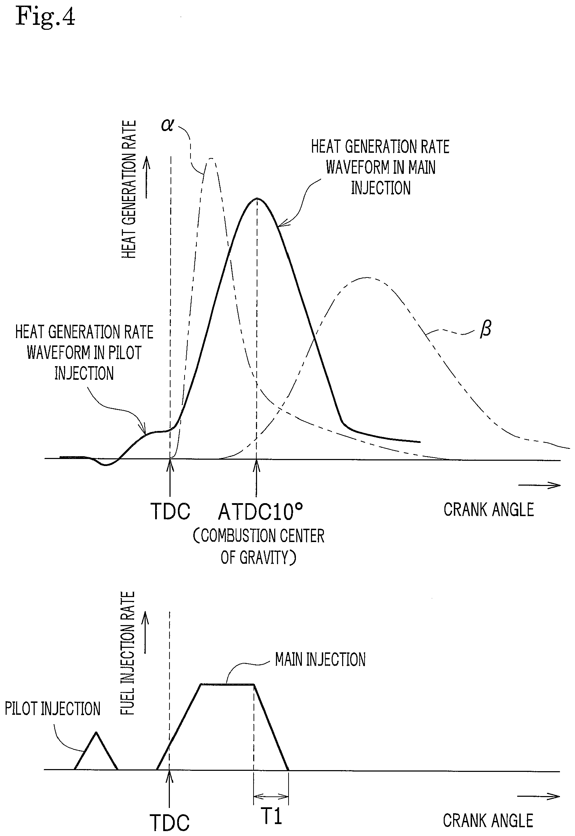

Fig. 4 is a waveform diagram illustrating one example of heat generation rate (heat generation amount per unit rotation angle of a crankshaft) at a time of expansion process and fuel injection rate (fuel injection amount per unit rotation angle of the crankshaft).
[Fig. 5]

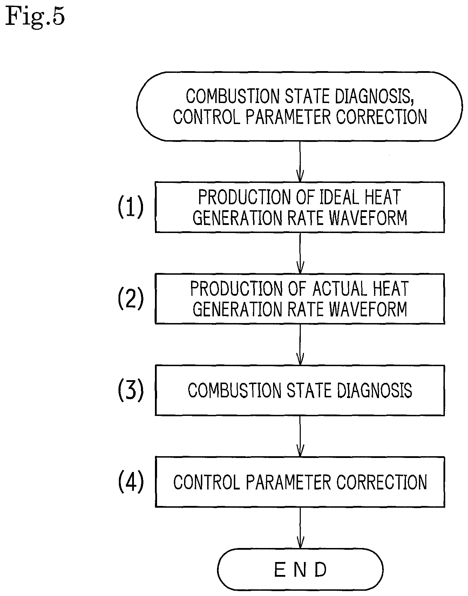

Fig. 5 is a flowchart diagram illustrating the procedure of diagnosis on combustion states and correction of control parameters.
[Fig. 6]

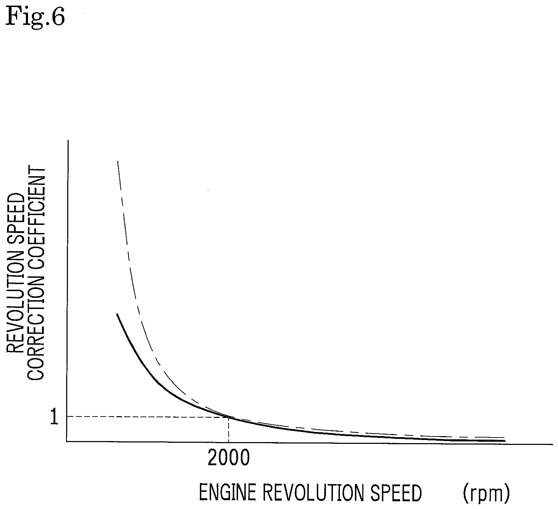

Fig. 6 is a diagram illustrating a revolution speed correction coefficient map.
[Fig. 7]

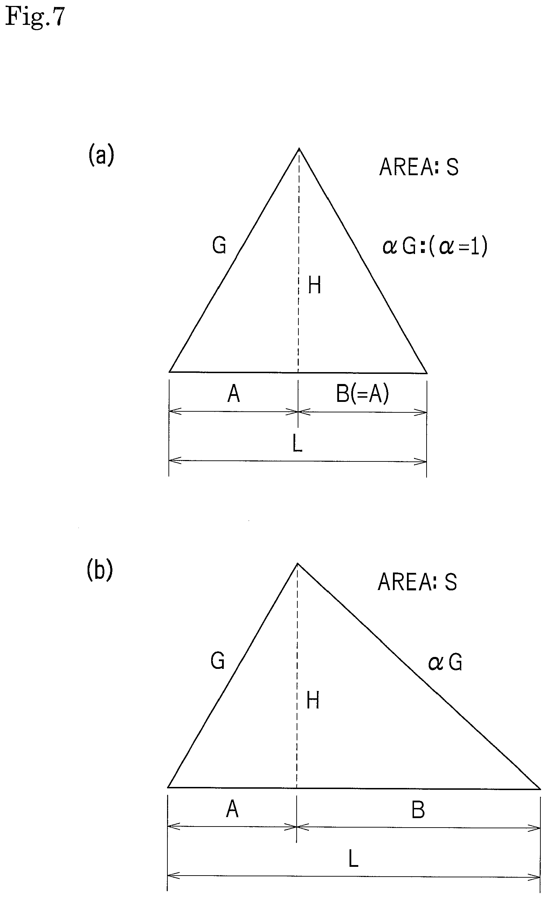

Fig. 7 is a diagram illustrating an ideal heat generation rate waveform model, and Fig. 7(a) is a diagram illustrating a case where the ideal heat generation rate waveform model is an isosceles triangle, and Fig. 7(b) is a diagram illustrating a case where the ideal heat generation rate waveform model is a scalene triangle, respectively.

[Fig. 8]

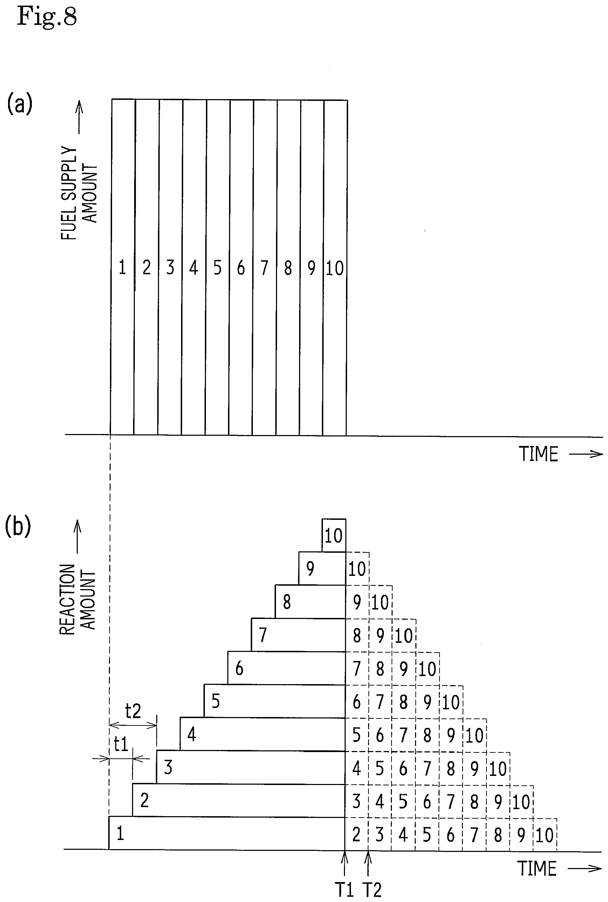

Fig. 8(a) is a diagram illustrating a relation between a lapsed time during which fuel injection is carried out from an injector and a fuel supply amount supplied to a cylinder, and Fig. 8(b) is a diagram illustrating the reaction amount of fuel injected in each injection period.

[Fig. 9]

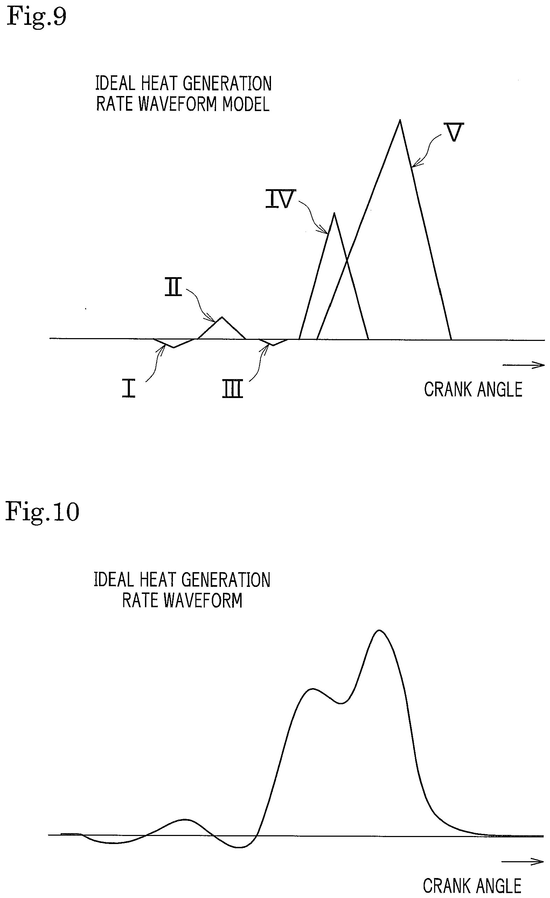

Fig. 9 is a diagram illustrating one example of the ideal heat generation rate waveform model regarding each reaction form in a case where one-time fuel injection is performed.

[Fig. 10]

Fig. 10 is a diagram illustrating the ideal heat generation rate waveform that is obtained by smoothing the ideal heat generation rate waveform model in Fig. 9 by means of filter processing.

[Fig. 11]

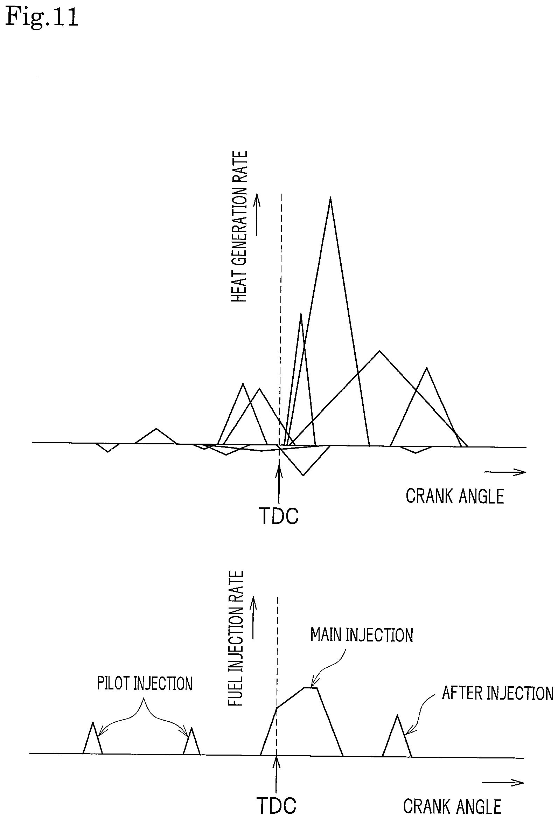

Fig. 11 is a diagram illustrating one example of the ideal heat generation rate waveform model and a fuel injection rate waveform in a case where two-time pilot injection and one-time main injection, and one-time after injection are performed.

[Fig. 12]

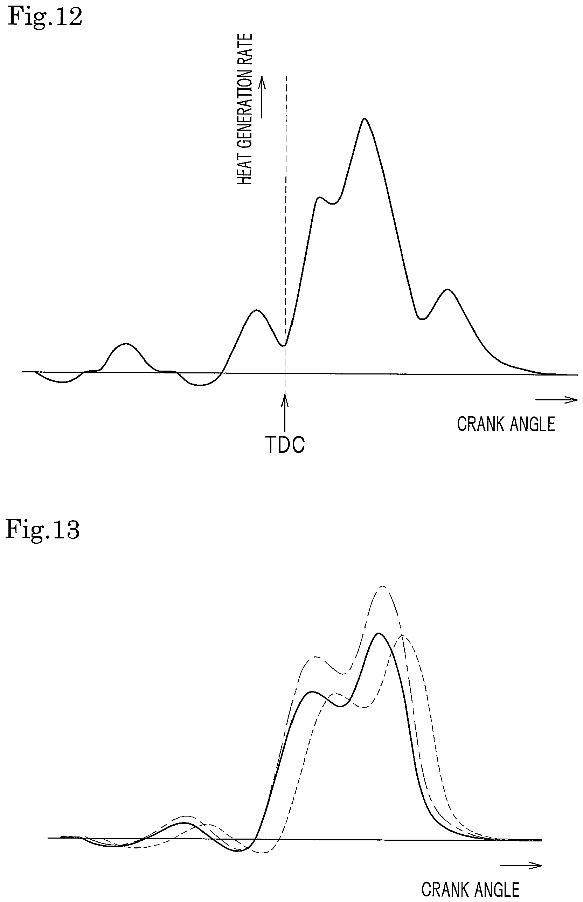

Fig. 12 is a diagram illustrating the ideal heat generation rate waveform that is obtained by smoothing the ideal heat generation rate waveform model in Fig. 11 by means of the filter processing.

[Fig. 13]

Fig. 13 is a diagram illustrating one example of the ideal heat generation rate waveform (solid line) and the actual heat generation rate waveform (dashed line and dashed-dotted line) in a case where the one-time fuel injection is performed.

[Fig. 14]

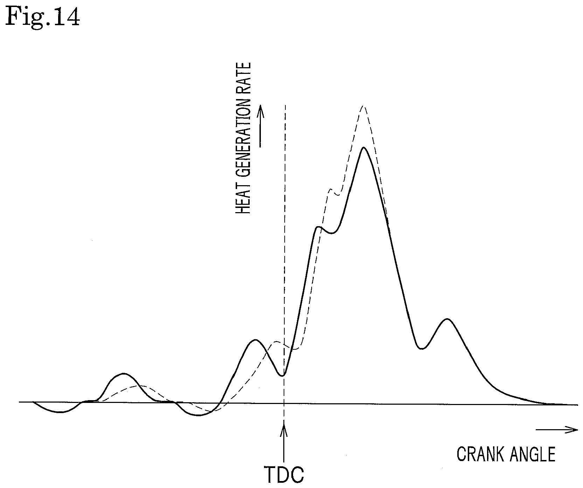

Fig. 14 is a diagram illustrating one example of the ideal heat generation rate waveform (solid line) and the actual heat generation rate waveform (dashed line) in the case where the two-time pilot injection and the one-time main injection, and the one-time after injection are performed.

[Fig. 15]

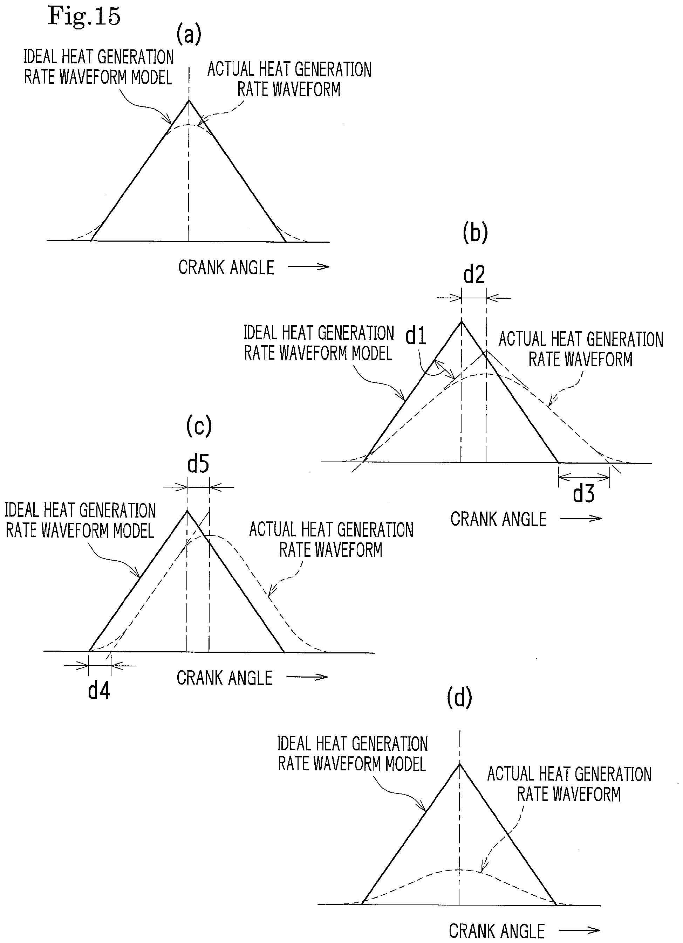

Fig. 15 is a diagram illustrating plural examples regarding the ideal heat generation rate waveform model (solid line) and the actual heat generation rate waveform (dashed line) in one reaction form in a modified example.

[Description of Embodiments]

Hereinafter, the embodiments of the present invention will be described referring to drawings. In the present embodiment, description will be given with regard to a case where the combustion state diagnostic apparatus of an internal combustion engine according to the present invention is applied to a common rail in-cylinder direct injection multi-cylinder (for example, inline four-cylinder) diesel engine (compression self-igniting internal combustion engine) installed in an automobile (mounted on a vehicle).

-Engine Configuration-

First, a schematic configuration of a diesel engine (hereinafter referred to simply as an engine) to which the present embodiments are applied will be described. Fig. 1 is a schematic configuration view of an engine 1 and a control system for the same according to the present embodiments. Also, Fig. 2 is a cross-sectional view of a combustion chamber 3 of the diesel engine 1 and peripheral parts of the combustion chamber 3.

As shown in Fig. 1, the engine 1 according to the present embodiments is configured as a diesel engine system including, as main units, a fuel supply system 2, the combustion chambers 3, an intake system 6, an exhaust system 7, and the like.

The fuel supply system 2 is configured to include a supply pump 21, a common rail 22, injectors (fuel injection valves) 23, an engine fuel path 27, and the like.

The supply pump 21 draws fuel from a fuel tank, and after putting this drawn fuel under high pressure, supplies that fuel to the common rail 22 via the engine fuel path 27. The common rail 22 has a function as an accumulation chamber where high pressure fuel is held (accumulated) at predetermined pressure, and distributes this accumulated fuel to each injector 23. The injectors 23 are configured as piezo injectors within which a piezoelectric element (piezo element) is disposed and that supply fuel by injection into the combustion chambers 3 by appropriately opening a valve.

The intake system 6 includes an intake manifold 63 connected to an intake port 15a formed in a cylinder head 15 (see Fig. 2), and an intake tube 64 constituting an intake path is connected to this intake manifold 63. Also, in this intake path, an air cleaner 65, an airflow meter 43, and an intake throttle valve (a diesel throttle) 62 are disposed in this order from the upstream side. The airflow meter 43 outputs an electrical signal corresponding to the amount of air that flows into the intake path via the air cleaner 65.

The exhaust system 7 includes an exhaust manifold 72 connected to an exhaust ports 71 formed in the cylinder head 15, and an exhaust tube 73 constituting an exhaust path is connected to this exhaust manifold 72. Also, in this exhaust path, an exhaust purification unit 77 is disposed. In the exhaust purification unit 77, there are provided an NSR (NOx Storage Reduction) catalyst (exhaust purification catalyst) 75 as an NOx storage reduction catalyst and a DPF (Diesel Particulate Filter) 76. It is noted that the DPNR (Diesel Particulate-NOx Reduction system) catalyst may be applied as the exhaust purification unit 77.

The NSR catalyst 75 stores NOx in a state in which a large amount of oxygen is present in the exhaust, while reducing NOx to $NO_2$ or NO to release NOx in a state in which the oxygen concentration in the exhaust is low and a large amount of a reduction component (for example, an unburned component (HC) of fuel) is present. NOx released as $NO_2$ or NO is further reduced to $N_2$ due to quick reaction with HC or CO in the exhaust. Also, by reducing $NO_2$ or NO, HC and CO themselves are oxidized and thus become $H_2O$ or $CO_2$. That is, by appropriately adjusting the oxygen concentration or the HC component in the exhaust introduced to the NSR catalyst 75, HC, CO, and NOx in the exhaust can be purified. In the configuration of the present embodiment, the oxygen concentration and the HC component in the exhaust can be adjusted with the operation of fuel injection (post-injection) from the injector 23 or the control of the opening degree of the intake throttle valve 62.

Also, the DPF 76, for example, is made up of a porous ceramic structure and configured to collect PM (Particulate Matter: particles) included in exhaust gas when the exhaust gas passes through a porous wall. Also, the DPF 76 supports a catalyst that oxidizes/burns the collected PM (for example, an oxidization catalyst whose main component is a precious metal such as platinum) at the time of DPF regeneration operation.

Herein, the configuration of the combustion chamber 3 of the diesel engine 1 and peripheral parts for the same will be described referring to Fig. 2. As is illustrated in Fig. 2, in a cylinder block 11 constituting part of a main body of the engine, a cylindrical cylinder bore 12 is formed in each cylinder (four cylinders), and a piston 13 is vertically, slidably stored in the interior of each cylinder bore 12.

The combustion chamber 3 is formed on the upper side of a top face 13a of the piston 13. That is, the combustion chamber 3 is formed and partitioned by a lower face of the cylinder head 15 installed on top of the cylinder block 11, an inner wall face of the cylinder bore 12, and the top face 13a of the piston 13. In the approximate center of the top face 13a of the piston 13, a cavity (a recessed unit) 13b is disposed in the form of a depression, and the cavity 13b also constitutes part of the combustion chamber 3.

The piston 13 is linked to a crankshaft serving as an engine output shaft by means of a connecting rod 18. This ensures that the reciprocating movement of the piston 13 within the cylinder bore 12 is transmitted to the crankshaft via the connecting rod 18, which allows the crankshaft to rotate to obtain engine output.

Also, a glow plug 19 is disposed facing the combustion chamber 3. The glow plug 19 functions as a starting assistance apparatus that glows by receiving a flow of electrical current immediately before the engine 1 is started, and that receives a blow of part of a fuel spray, thus promoting ignition and combustion.

In the cylinder head 15, the intake port 15a and the exhaust port 71 are respectively disposed, and an intake valve 16 to open/close the intake port 15a and an exhaust valve 17 to open/close the exhaust port 71 are disposed. Also, the injector 23, which injects fuel directly into the combustion chamber 3, is arranged in the cylinder head 15. The injector 23 is disposed in approximately the center above the combustion chamber 3 in upright orientation along a cylinder center line P, and injects fuel introduced from the common rail 22 toward the combustion chamber 3 at a predetermined timing.

Furthermore, as illustrated in Fig. 1, a supercharger (turbocharger) 5 is disposed in the engine 1. The turbocharger 5 includes a turbine wheel 52 and a compressor wheel 53 that are linked to one another via a turbine shaft 51. The compressor wheel 53 is disposed facing the inside of the intake tube 64, while the turbine wheel 52 is disposed facing the inside of the exhaust tube 73. This ensures that the turbocharger 5 utilizes exhaust flow (exhaust pressure) received by the turbine wheel 52 to rotate the compressor wheel 53, so as to implement what is called a turbocharging operation such as increasing the intake pressure. The turbocharger 5 of the present embodiment is a variable nozzle-type turbocharger, in which a variable nozzle vane mechanism (not illustrated) is provided on the turbine wheel 52 side. Adjusting the opening degree of the variable nozzle vane mechanism ensures adjustment of the turbocharging pressure of the engine 1.

The intake tube 64 of the intake system 6 includes an intercooler 61 that forcibly cools intake air heated by supercharging with the turbocharger 5.

Also, the engine 1 includes an exhaust gas recirculation path (EGR path) 8 that connects the intake system 6 and the exhaust system 7. The EGR path 8 appropriately recirculates part of the exhaust to the intake system 6 and resupplies the part of the exhaust to the combustion chamber 3, so as to decrease combustion temperature. Thus, the amount of produced NOx is reduced. Also, the EGR path 8 includes an EGR valve 81 that is opened/closed steplessly under electronic control and is capable of freely adjusting the amount of exhaust flow that flows through the EGR path 8, and an EGR cooler 82 that cools exhaust passing through (recirculates through) the EGR path 8. The EGR path 8, the EGR valve 81, the EGR cooler 82, and the like constitute an EGR apparatus (exhaust gas recirculation apparatus).

-Sensors-

Various sensors are attached to the parts of the engine 1 to output signals related to environmental conditions at each part and the operating state of the engine 1.

For example, the airflow meter 43 outputs a detection signal corresponding to an intake air flow amount (intake air amount) on the upstream of the intake throttle valve 62 within the intake system 6. A rail pressure sensor 41 outputs a detection signal corresponding to the pressure of fuel accumulated in the common rail 22. A throttle opening degree sensor 42 detects the opening degree of the intake throttle valve 62. An intake pressure sensor 48 is disposed in the intake manifold 63 and outputs a detection signal corresponding to the intake air pressure. An intake temperature sensor 49 is disposed in the intake manifold 63 and outputs a detection signal corresponding to the temperature of intake air. A/F (air-fuel ratio) sensors 44a and 44b are respectively disposed on the upstream side and the downstream side of the NSR catalyst 75 and output a detection signal that continuously changes in accordance with the oxygen concentration in exhaust. It is noted that the installation position of the A/F sensors may be only on the upstream side of the NSR catalyst 75 or only on the downstream side of the NSR catalyst 75. Exhaust temperature sensors 45a and 45b are respectively disposed on the upstream side and the downstream side of the NSR catalyst 75 likewise and output a detection signal in accordance with the temperature of exhaust gas (exhaust temperature). It is noted that the installation position of the exhaust temperature sensors likewise may be only on the upstream side of the NSR catalyst 75 or only on the downstream side of the NSR catalyst 75.

-ECU-

The ECU 100 includes a microcomputer made up of a CPU, a ROM, a RAM, and the like and an input/output circuit, which are not illustrated. As illustrated in Fig. 3, the rail pressure sensor 41, the throttle opening degree sensor 42, the airflow meter 43, the A/F sensors 44a and 44b, the exhaust temperature sensors 45a and 45b, the intake pressure sensor 48, and the intake temperature sensor 49 are connected to the input circuit of the ECU 100. Furthermore, connected to the input circuit are a water temperature sensor 46 that outputs a detection signal corresponding to the coolant temperature of the engine 1, an accelerator opening degree sensor 47 that outputs a detection signal corresponding to the amount of pressing of an accelerator pedal, a crank position sensor 40 that outputs a detection signal (pulse) at each rotation of an output shaft (crankshaft) of the engine 1 by a predetermined angle, an in-cylinder pressure sensor (CPS (Combustion Pressure Sensor)) 4A to detect in-cylinder pressure, and the like.

Meanwhile, the supply pump 21, the injector 23, the intake throttle valve 62, the EGR valve 81, and the variable nozzle vane mechanism (an actuator that adjusts the opening degree of the variable nozzle vane) 54 of the turbocharger 5 are connected to the output circuit of the ECU 100.

Then, the ECU 100 executes various kinds of control of the engine 1 based on the output of the various sensors described above, mathematical values obtained by a mathematical formula in which the values of the output are used, and various maps stored in the ROM.

For example, as control of fuel injection of the injector 23, the ECU 100 executes a pilot injection (auxiliary injection) and a main injection.

The pilot injection is an operation that pre-injects a small amount of fuel prior to the main injection from the injector 23. Also, the pilot injection is an injection operation for suppressing an ignition delay of fuel in the main injection, thus leading to stable diffusion combustion, which is also referred to as auxiliary injection.

The main injection is an injection operation for generating torque of the engine 1 (torque-generating fuel supply operation). The injection amount in the main injection is basically determined corresponding to the operating states, such as engine revolution speed (engine revolution), amount of accelerator operation, coolant temperature, and intake air temperature, so as to obtain a required torque. For example, a higher torque required value of the engine 1 is obtained as the engine revolution speed (engine revolution speed calculated based on a detection value of the crank position sensor 40; engine revolution) increases, and as the accelerator operation amount (amount of pressing of accelerator pedal detected by the accelerator opening degree sensor 47) increases (as the accelerator opening degree increases). Accordingly, a large fuel injection amount is set in the main injection.

As one example of the specific form of fuel injection, the pilot injection (the fuel injection from a plurality of nozzle holes formed in the injector 23) is executed before the piston 13 reaches its compression top dead center, and after fuel injection is temporarily stopped, a predetermined interval is established, and the main injection is executed at the time point when the piston 13 reaches the neighborhood of the compression top dead center. Accordingly, this allows the fuel to self-ignite and to be combusted, and the energy generated through the combustion is converted into kinetic energy (energy serving as engine output) that presses down the piston 13 to the bottom dead center, heat energy that raises the temperature in the combustion chamber 3, and heat energy that is radiated to the outside (e.g., coolant) via the cylinder block 11 or the cylinder head 15.

It is noted that, in addition to the pilot injection and main injection described above, after-injection or post-injection is executed as needed. The functions of these injections are well-known, and their description is omitted.

Also, the ECU 100 controls the opening degree of the EGR valve 81 in accordance with the operating state of the engine 1 and adjusts an exhaust gas recirculation amount (EGR amount) toward the intake manifold 63. The EGR amount is produced in advance based on experiment, simulation, or the like and set in accordance with an EGR map stored in the ROM. The EGR map is a map to determine the EGR amount (EGR ratio) by use of parameters such as engine revolution speed and engine load.

The fuel injection pressure during execution of the fuel injection is determined by the internal pressure of the common rail 22 (common rail pressure). The common rail internal pressure is generally such that the target value of the fuel pressure supplied from the common rail 22 to the injector 23, that is, the target rail pressure, is set high as the engine load increases, and as the engine revolution speed increases. The target rail pressure, for example, is set in accordance with a fuel pressure setting map stored in the ROM. In the present embodiment, the fuel pressure is adjusted between 30 MPa and 200 MPa in response to the engine load and the like.

Next, a heat generation rate and a fuel injection rate during expansion process will be described. The solid line in the waveform illustrated in the upper section of Fig. 4 is an ideal heat generation rate waveform regarding the combustion of fuel injected in the pilot injection and the main injection, where the horizontal axis represents the crank angle, and the vertical axis represents the heat generation rate (the method of producing the ideal heat generation rate waveform and diagnosis (combustion state diagnosis) of the reaction form of fuel by use of this ideal heat generation rate waveform will be described later). In the diagram, TDC indicates a crank angle position corresponding to the compression top dead center of the piston 13. Also, the waveform illustrated in the lower section of Fig. 4 is an injection rate (fuel injection amount per rotation angle unit of the crankshaft) waveform of fuel injected from the injector 23.

In the heat generation rate waveform, for example, the combustion of the fuel injected in the main injection is started at the compression top dead center (TDC) of the piston 13, and the heat generation rate reaches a maximum value (peak value) at a predetermined piston position after the compression top dead center of the piston 13 (for example, a time point of 10 degrees after compression top dead center (ATDC 10°)), and furthermore, the combustion of the fuel injected in the main injection is completed at a predetermined piston position after the compression top dead center (for example, a time point of 25 degrees after compression top dead center (ATDC 25°)). Implementing the combustion of the mixture with this changing state of the heat generation rate ensures that the combustion of about 50% of the mixture in the cylinder is complete at a time point of, for example, 10 degrees after compression top dead center (ATDC 10°). That is, with the time point of 10 degrees after compression top dead center (ATDC 10°) acting as a combustion center of gravity, about 50% of the total amount of heat produced in the expansion process is produced no later than ATDC 10°. This ensures a high thermal efficiency in operating the engine 1.

Also, regarding the relation of the crank angle and a fuel injection rate waveform at a time point when the combustion center of gravity is attained, the combustion center of gravity is positioned in a period (period T1 in Fig. 4) ranging from a time point when fuel injection stop signal is transmitted to the injector 23 to a time point when the fuel injection is completely stopped.

It is noted that, with regards to the combustion of the fuel injected in the pilot injection, the heat generation rate reaches 10 [J/°CA] at the compression top dead center (TDC) of the piston 13, whereby the stable diffusion combustion of the fuel injected in the main injection is realized. This value is not limited but appropriately set, for example, in accordance with the total fuel injection amount.

In the present embodiment described above, the interior of the cylinder is adequately preheated by the pilot injection. When the main injection is started by the preheat, the fuel injected by the main injection is immediately exposed to a temperature environment that is equal to or higher than a self-ignition temperature, and thus thermolysis progresses, and after the injection, the combustion immediately starts.

Also, the waveform illustrated in a chain double-dashed line α in Fig. 4 is a heat generation rate waveform in a case where the fuel injection pressure is set higher than an appropriate value, and both a combustion speed and a peak value are too high, which is in a state where there is an apprehension that combustion noise increases, and the amount of generated NOx increases. In contrast, a waveform illustrated in a chain double-dashed line β in Fig. 4 is a heat generation rate waveform in a case where the fuel injection pressure is set lower than an appropriate value, and the combustion speed is low, and the timing of arriving the peak is remarkably transferred to the delay angle side, which is in a state where there is an apprehension that the engine torque cannot adequately be secured.

Also, the ECU 100 controls the opening degree of the EGR valve 81 in accordance with the operating state of the engine 1 and adjusts the exhaust gas recirculation amount (EGR amount) toward the intake manifold 63. The EGR amount is produced in advance based on experiment, simulation, or the like and set in accordance with the EGR map stored in the ROM. The EGR map is a map to determine the EGR amount (EGR ratio) by use of parameters such as engine revolution speed and engine load.

-Combustion State Diagnosis and Control Parameter Correction-

Next, the combustion state diagnosis (diagnosis of each reaction form of the fuel in the cylinder), which is the features of the present invention, and control parameter correction executed in accordance with its diagnostic results will be described.

Regarding to the combustion state diagnosis and the control parameter correction, as described in Fig. 5, after (1) the production of the ideal heat generation rate waveform and (2) the production of the actual heat generation rate waveform are performed, (3) the combustion state diagnosis is carried out based on the comparison of the ideal heat generation rate waveform with the actual heat generation rate waveform. Then, (4) the control parameter correction of the engine 1 in accordance with the results of the combustion state diagnosis is carried out.

Also, regarding the production of the ideal heat generation rate waveform, (1-A) Separation of Reaction Form of Fuel, (1-B) Production of Ideal Heat Generation Rate Waveform Model With Respect To Each Reaction Form To Be Separated, and (1-C) Production of Ideal Heat Generation Rate Waveform Through Filtering (Filter Processing) of Ideal Heat Generation Rate Waveform Model are carried out in order.

Hereinafter, each operation will be specifically described.

(1) Production of Ideal Heat Generation Rate Waveform

The production of the ideal heat generation rate waveform will be described. First, the outline of the production of the ideal heat generation rate waveform will be described.

In-cylinder temperature, the amount of oxygen in the cylinder, an in-cylinder fuel amount (amount of fuel sprayed), and a distribution of the fuel in the cylinder are cited as rate-controlling conditions of reaction (chemical reaction and the like) of the fuel injected into the cylinder from the injector 23. Among these, the in-cylinder temperature, the amount of oxygen in the cylinder, the in-cylinder fuel amount, and the distribution of the fuel in the cylinder are placed in the order of low degree of freedom of control.

That is, the in-cylinder temperature is approximately determined by the intake air temperature and a compression ratio of the engine 1 at a preceding stage where the fuel reacts, so that the degree of freedom of control is the lowest. Also, when the fuel injection is antecedently carried out, the in-cylinder temperature fluctuates due to the preheating amount of the combustion of the fuel. Also, the amount of oxygen in the cylinder can be adjusted by the opening degree of the intake throttle valve 62 or the opening degree of the EGR valve 81, so that the degree of freedom of control is high, compared with the in-cylinder temperature. Also, the amount of oxygen in the cylinder also fluctuates due to a supercharging ratio of the turbocharger 5. Furthermore, the in-cylinder fuel amount can be adjusted based on the control of fuel injection pressure (common rail pressure) by means of the supply pump 21 or the control of respective injection intervals of multi-stage injection of fuel from the injector 23, so that the degree of freedom of control is high, compared with the amount of oxygen in the cylinder. Also, the distribution of the fuel in the cylinder can be adjusted based on the control of fuel injection pressure or the control of respective injection intervals of multi-stage injection of the fuel, so that the degree of freedom of control is high.

Then, in the present embodiment, on conditions that a warm-up operation of the engine 1 is completed, and that the outside air temperature is equal to or higher than a predetermined temperature (e.g., zero degrees), the priority of the condition that the reaction state of fuel is determined is set high in the order of low degree of freedom of control. Herein, the priority of the quantitative conditions such as the in-cylinder temperature, the amount of oxygen in the cylinder, and the in-cylinder fuel amount is considered to be higher than that of the distribution of the fuel in the cylinder. That is, the start timing (reaction start time) of each reaction of the fuel based on the in-cylinder temperature as a center is determined. That is, a reference temperature arrival angle (a crank angle position at the reaction start timing in each reaction form) is established based on the in-cylinder gas temperature (compression gas temperature).

Then, a reaction velocity, a reaction amount, and a reaction period are respectively obtained with this reaction start time as a reference point, and an ideal heat generation rate waveform model is produced for each reaction form. That is, the reaction velocity, the reaction amount, and the reaction period with regards to a respective plurality of reaction forms of the fuel injected in the cylinder are calculated in accordance with in-cylinder environments (in-cylinder gas temperature and the like that determine the reaction start time) and fuel composition (fuel amount and fuel density that contribute to the reaction are included), thereby producing the ideal heat generation rate waveform model for each reaction.

Specifically, a reference reaction velocity efficiency [$J/CA^2/mm^3$] and a reference reaction amount efficiency [$J/mm^3$] corresponding to the in-cylinder gas temperature (reference temperature) and the fuel composition and the like at the reaction start time are established for each reaction form, and the reference reaction velocity efficiency and the reference reaction amount efficiency are corrected based on oxygen supply capacity (oxygen density) with respect to the combustion field, and the reaction velocity and the reaction amount are established based on these corrected efficiency and fuel amount. Also, a correction in accordance with an engine revolution speed described later is carried out for the reaction velocity.

Then, an ideal heat generation rate waveform model (triangle model) described later is produced based on the reaction start time, the reaction velocity, and the reaction amount, thereby establishing the reaction period. The reaction period is obtained by a formula (1) below.

$$\text{Reaction period} = 2 \times (\text{Reaction Amount} / \text{Reaction velocity})^{1/2} \cdots (1)$$

It is noted that the production of the ideal heat generation rate waveform model (triangle model) is described later in detail.

(1-A) Separation of Reaction Form of Fuel

Next, the separation of the reaction forms of the fuel, which is the first procedure of the production of the ideal heat generation rate waveform, will be described.

When the fuel injection is carried out from the injector 23, a gasification reaction, a low-temperature oxidation reaction, a thermal decomposition reaction, and a high-temperature oxidation reaction are carried out corresponding to the in-cylinder environments in the cylinder. Furthermore, the high-temperature oxidation reaction can be separated into a high-temperature oxidation reaction by the premixed combustion and a high-temperature oxidation reaction by the diffusion combustion. Hereinafter, each reaction form will be described.

(a) Gasification Reaction

The gasification reaction means that the fuel injected from the injector 23 is gasified in response to the heat in the cylinder. In general, this reaction means the spray rate-controlling reaction, which is started in a case where the diffusion of fuel spray progresses to some extent in a state where the fuel is exposed to the environment in which the in-cylinder gas temperature is equal to or higher than 500 K.

The boiling point of light oil used in the diesel engine 1 is generally 453 K to 623 K, and the practical use range in which the fuel injection is carried out in the cylinder (for example, a time when the pilot injection is carried out) is BTDC (before compression top dead center) 40° CA. The in-cylinder gas temperature is generally raised from about 550 K to 600 K (except for cold districts), it is not necessary to take account of the temperature rate-controlling conditions regarding the gasification reaction.

Then, the reference reaction amount efficiency in the gasification reaction, for example, is 1.14 [J/mm$^3$].

Also, the effective injection amount (fuel amount that contributes to the gasification reaction) in the gasification reaction is an amount obtained by subtracting a wall surface adhesion amount (fuel amount adhered to the wall surface of the cylinder bore 12) from the fuel injection amount. The wall surface adhesion amount can be experimentally obtained in accordance with the injection amount (correlated with the penetration force of the fuel) and the injection time (correlated with the in-cylinder pressure).

Accordingly, the reaction amount regarding the gasification reaction is obtained by a formula (2) below.

$$\text{Reaction Amount in Gasification Reaction} = \square 1.14 \times \text{Effective Injection Amount} \cdots (2)$$

It is noted that the gasification reaction is endothermic reaction, which provides a negative value as the reaction amount (heat generation amount).

(b) Low-temperature Oxidation Reaction

The low-temperature oxidation reaction is reaction in which the low-temperature oxidation reaction component (fuel of a straight chain single bond composition such as a n-cetane ($C_{16}H_{34}$)) included in the light oil, which is fuel for diesel engine 1, is combusted. Even when the in-cylinder temperature is relatively low, the low-temperature oxidation reaction is an ignitable component, and the low-temperature oxidation reaction easily progresses in the cylinder as the amount of the n-cetane or the like increases (higher cetane number fuel), which suppresses an ignition delay. Specifically, the low-temperature oxidation reaction component such as the n-cetane starts combustion (low-temperature oxidation reaction) at the time point when the in-cylinder temperature reaches about 750 K. It is noted that fuel components (high-temperature oxidation reaction component) except for n-cetane and the like does not start the combustion (high-temperature oxidation reaction) until the in-cylinder temperature reaches about 900 K.

Then, the reference reaction velocity efficiency in the low-temperature oxidation reaction, for example, is 0.294 $[J/CA^2/mm^3]$. Also, the reference reaction amount efficiency, for example, is 5.0 $[J / mm^3]$.

Also, the reaction velocity and the reaction amount of the low-temperature oxidation reaction are calculated based on the reference reaction velocity efficiency and the reference reaction amount efficiency (for example, calculated by multiplying the effective injection amount). Furthermore, regarding the calculation of the reaction velocity of the low-temperature oxidation reaction, a coefficient (revolution speed correction coefficient = (reference revolution speed / actual revolution speed)$^2$) corresponding to the engine revolution speed is multiplied by a value (reference reaction velocity) obtained by multiplying the effective injection amount by the reference reaction velocity efficiency. It is noted that an arbitrary revolution speed (e.g., 2000 rpm) can be set as the reference revolution speed to obtain the revolution speed correction coefficient. Accordingly, even when the gas composition or the like is changed, the reaction velocity can be obtained as a value depending on time.

It is noted that the revolution speed correction coefficient may be obtained from a revolution speed correction coefficient map illustrated in Fig. 6. The revolution speed correction coefficient map illustrated in Fig. 6 is such that the reference revolution speed is set to 2000 rpm. In an area where the actual revolution speed of the engine 1 is equal to or higher than the reference revolution speed (2000 rpm), the revolution speed correction coefficient is obtained as a value corresponding to (reference revolution speed / actual revolution speed)$^2$ (a value corresponding to the engine revolution speed illustrated by a dashed-dotted line in the diagram). In contrast, an area where the actual revolution speed of the engine 1 is less than the reference revolution speed (2000 rpm), the revolution speed correction coefficient is obtained as a value in which the value corresponding to (reference revolution speed / actual revolution speed)$^2$ is corrected by a predetermined ratio (corrected to the lower side) (see the solid line in the area where the actual revolution speed is less than the reference revolution speed). The correction ratio in this case is obtained based on experiment or simulation.

The reference revolution speed is not limited to the above-described values, but preferably set to a revolution speed area where the use frequency of the engine 1 is the highest.

It is noted that the low-temperature oxidation reaction is the heat generation reaction, so that the reaction amount (heat generation amount) is a positive value.

(C) Thermal Decomposition Reaction

The thermal decomposition reaction is reaction in which the thermal decomposition of fuel component is performed, and its reaction temperature, for example, is about 800 K.

Also, the reference reaction velocity efficiency in the thermal decomposition reaction, for example, is 0.384 $[J/CA^2/mm^3]$. Also, the reference reaction amount efficiency, for example, is 5.0 $[J / mm^3]$.

Similarly, the reaction velocity and the reaction amount of the thermal decomposition reaction are also calculated based on the reference reaction velocity efficiency and the reference reaction amount efficiency (for example, calculated by multiplying the effective injection amount). Furthermore, regarding the calculation of the reaction velocity of the thermal decomposition reaction, the revolution speed correction coefficient corresponding to the engine revolution speed is multiplied by a value (reference reaction velocity) obtained by multiplying the effective injection amount by the reference reaction velocity efficiency.

It is noted that, in the present embodiment, the thermal decomposition reaction is regarded as the endothermic reaction. That is, the reaction amount (heat generation amount) is considered a negative value.

(d) High-temperature Oxidation Reaction by Premixed Combustion

The reaction temperature of the high-temperature oxidation reaction by the premixed combustion, for example, is about 900 K. That is, the reaction that starts combustion at a time when the in-cylinder temperature reaches 900 K is considered the high-temperature oxidation reaction by the premixed combustion.

Also, the reference reaction velocity efficiency in the high-temperature oxidation reaction by the premixed combustion, for example, is 4.3 $[J/CA^2/mm^3]$. Also, the reference reaction amount efficiency, for example, is 30.0 $[J / mm^3]$.

Similarly, the reaction velocity and the reaction amount of the high-temperature oxidation reaction by the premixed combustion are also calculated based on the reference reaction velocity efficiency and the reference reaction amount efficiency (for example, calculated by multiplying the effective injection amount). Furthermore, regarding the calculation of the reaction velocity of the high-temperature oxidation reaction by the premixed combustion, the revolution speed correction coefficient corresponding to the engine revolution speed is multiplied by a value (reference reaction velocity) obtained by multiplying the effective injection amount by the reference reaction velocity efficiency.

It is noted that the high-temperature oxidation reaction by the premixed combustion is the heat generation reaction, and the reaction amount (heat generation amount) is considered a positive value.

(e) High-temperature Oxidation Reaction by Diffusion Combustion

The reaction temperature of the high-temperature oxidation reaction by the diffusion combustion, for example, is about 1000 K. That is, the high-temperature oxidation reaction by the diffusion combustion is such a reaction that starts the combustion of fuel injected into the cylinder, in which the in-cylinder temperature is equal to or higher than 1000K, immediately after the injection.
Also, the reaction velocity in the high-temperature oxidation reaction by the diffusion combustion is changed in response to the common rail pressure and the fuel injection amount and obtained based on formulas (3) and (4) below.

$$GrdB = A \times \text{Common Rail Pressure} + B \quad \cdots (3)$$

$$Grd = GrdB \times (\text{Reference Engine Revolution speed} / \text{Actual Engine Revolution speed})^2 \times (d / \text{Reference d}) \times (N / \text{Reference N}) \quad \cdots (4)$$

GrdB: Reference Reaction velocity, Grd: Reaction velocity, d: Injection Hole Diameter of Injector 23, N: Number of Injection Holes of Injector 23, A, B: Constants Obtained through Experiment or the like
It is noted that the formula (4) above is a formula that is generalized by multiplying a ratio of a reference injection hole diameter to an actual injection hole diameter of the injector 23 and a ratio of the reference number of injection holes to the actual number of injection holes of the injector 23. Also, in this formula (4), the revolution speed correction coefficient is multiplied, thereby obtaining the reaction velocity corrected in accordance with the engine revolution speed.
Also, the reference reaction amount efficiency of the high-temperature oxidation reaction by the diffusion combustion, for example, is 30.0 [J / mm$^3$]. The reaction amount of the high-temperature oxidation reaction by the diffusion combustion is also calculated based on the reference reaction amount efficiency (for example, calculated by multiplying the effective injection amount).
It is noted that the high-temperature oxidation reaction by the diffusion combustion is the heat generation reaction, and the reaction amount (heat generation amount) is considered a positive value.
As described above, the reaction forms of the fuel can be separated.

(1-B) Production of Ideal Heat Generation Rate Waveform Model With Respect To Each Reaction Form To Be Separated

Next, the production of the ideal heat generation rate waveform model with respect to each reaction form to be separated will be respectively described.
As described above, the reaction forms are separated, so that the ideal heat generation rate waveform model regarding respective reaction forms can be produced. That is, the ideal heat generation rate waveform model can be respectively produced for the gasification reaction, the low-temperature oxidation reaction, the thermal decomposition reaction, the high-temperature oxidation reaction by the premixed combustion, and the high-temperature oxidation reaction by the diffusion combustion.
In the present embodiment, the ideal heat generation rate waveform model for each reaction is approximated as an isosceles triangle. That is, the ideal heat generation rate waveform model is produced wherein, with the above-described reaction start temperature as a reference point, the gradient of the oblique side of the isosceles triangle is regarded as the reaction velocity, and the area of the isosceles triangle is regarded as the reaction amount, and the length of the base of the isosceles triangle is regarded as the reaction period. As described above, the reaction start temperatures are about 500 K in the gasification reaction, about 750 K in the low-temperature oxidation reaction, about 800 K in the thermal decomposition reaction, about 900 K in the high-temperature oxidation reaction by the premixed combustion, and about 1000 K in the high-temperature oxidation reaction by the diffusion combustion. The production of the ideal heat generation rate waveform model below is applied to above-described respective reaction forms, which is specifically described below.

(a) Reaction velocity (Gradient)

The reaction velocity is set based on the reference reaction velocity efficiency, and when the ideal heat generation rate waveform model is approximated as the isosceles triangle, the absolute value of the rising gradient in a period during which the heat generation rate rises corresponds to the absolute value of the falling gradient in a period during which the heat generation rate falls.

When the reaction velocity in the period during which the heat generation rate falls is lower than the reaction velocity in the period during which the heat generation rate rises (when the ideal heat generation rate waveform model is formed in a scalene triangle), the falling gradient is obtained by multiplying a predetermined value $\alpha$ (< 1) by the rising gradient.

Regarding the ideal heat generation rate waveform model in the high-temperature oxidation reaction by the diffusion combustion, the reaction velocity is in proportion to an injection rate waveform gradient, and regarding the ideal heat generation rate waveform model in other reaction, the reaction velocity is in proportion to the fuel injection amount.

(b) Heat Generation Amount (Area)

When the combustion period is normalized, the heat efficiency [J/mm$^3$] of each reaction is regarded as a constant (for example, 30 J/mm$^3$ in the case of the high-temperature oxidation reaction). Accordingly, the heat generation amount is obtained by multiplying the heat efficiency by the fuel injection amount (the above-described effective injection amount).

However, the low-temperature oxidation reaction is completed with sum of the high-temperature oxidation reaction, and the high-temperature oxidation reaction by the diffusion combustion is single-handedly completed.

The heat generation amount obtained in this manner corresponds to the area of the triangle, which is the ideal heat generation rate waveform model.

(c) Combustion Period (Base)

The combustion period corresponding to the length of the base of the triangle is obtained based on the gradient of the triangle (reaction velocity) and the area of the triangle (heat generation amount) as described above.

As illustrated in Fig. 7, the following relation is established in a case where S represents the area of the triangle (corresponding to the heat generation amount), and L represents the length of the base (corresponding to the combustion period), and H represents height (corresponding to the heat generation rate at the peak time of the heat generation rate), and A represents a period from the combustion start time to the peak time of the heat generation rate, and B represents a period from the peak time of the heat generation rate to the combustion finish time (B = A in the case where the ideal heat generation rate waveform model is an isosceles triangle), and G represents the rising gradient (corresponding to the reaction velocity in the period during which the heat generation rate rises), and $\alpha$ ($\leq$ 1) represents a ratio of the falling gradient to the rising gradient (corresponding to the reaction velocity in the period during which the heat generation rate falls). It is noted that Fig. 7(a) illustrates the case where the ideal heat generation rate waveform model is an isosceles triangle, and Fig. 7(b) illustrates the ideal heat production rate waveform model is a scalene triangle.

$$H = A \times G = B \times \alpha \times G$$

Accordingly, B = A / $\alpha$ is represented.

$$S = A^2 \times G / 2 + A \times G \times B / 2 = (1 + 1 / \alpha) \times A^2 \times G / 2$$

Accordingly, A = SQRT [2S / {(1 + 1/$\alpha$) G}] is represented.
Accordingly, the length L of the base is represented as

$$L = A + B = A (1 + 1/\alpha) = (1 + 1/\alpha) \times \text{SQRT} [2S / \{(1 + 1/\alpha) G\}].$$

When the ideal heat generation rate waveform model is the isosceles triangle, $\alpha$ = 1, and

$$L = 2 \times \text{SQRT} (S/G) = 2 \times \text{SQRT} (30 \times Fq/G) \text{ is represented.}$$

(Fq is the fuel injection amount (effective injection amount), and when the heat generation amount per 1 mm$^3$ of fuel is 30 J, as described above, "30 $\times$ Fq" represents the area S of the triangle.) Thus, when the injection amount (injection amount command value: a value correlated with the heat generation amount) the gradient (reaction velocity) are provided, the combustion period is established.

Hereinafter, the reason that the ideal heat generation rate waveform model can be approximated as the triangle (in particular, isosceles triangle) will be described. Fig. 8(a) represents the relation between a lapsed time during which the fuel injection is carried out from the injector 23 and the fuel supply amount provided into the cylinder in one reaction form (the amount of fuel used in the reaction form). Also, In Fig. 8(a), the fuel injection period, in which the fuel supply amount is obtained, is partitioned into 10 periods. That is, the fuel injection period is partitioned into 10 periods, each of which has an equivalent fuel supply amount, and a period number is provided from the first period to the tenth period respectively. That is, the fuel injection continues until the finish time point of the tenth period with an injection form in such a manner that, after the fuel injection is completed in the first period, and the fuel injection is started in the second period without interruption of the fuel injection, and after the fuel injection is completed in the second period, the fuel injection is stared in the third period without interruption of the fuel injection.

Also, Fig. 8(b) represents the reaction amount of the fuel injected in the each period (Fig. 8(b) represents the heat generation amount in the heat generation reaction). As is illustrated in Fig. 8(b), the fuel injection is started in the first period, and only the reaction of the fuel injected in the first period is conducted until the fuel injection is started in the second period (a period t1 in Fig. 8(b)). Then, the fuel injection is started in the second period, and the reaction of the fuel injected in the first period and the reaction of the fuel injected in the second period both are conducted until the fuel injection is started in the third period (a period t2 in Fig. 8(b)). Thus, every time a new injection period is introduced, the total reaction amount of the fuel is gradually increased (the total reaction amount is increased only by the fuel provided in the period in which a new injection is started). This increase period corresponds to the period of the gradient in the positive side of the ideal heat generation rate waveform model (advance angle side with respect to the peak position of the reaction).

Subsequently, the reaction of the fuel injected in the first period is completed. At this time point (a timing T1 in Fig. 8(b)), the reaction of the fuel injected after the second period is not completed, and the reaction of the fuel injected from the second period to the tenth period has been continued. Then, when the reaction of the fuel injected in the second period is completed (a timing T2 in Fig. 8(b)), the reaction of the fuel injected after the third period is not completed, so that the reaction of the fuel injected from the third period to the tenth period has been continued. Thus, the reaction of the fuel injected in each period is sequentially completed, so that the total reaction amount of the fuel is gradually decreased (the total reaction amount is decreased only by the amount of fuel for which reaction is completed). This decrease period (period illustrated as the reaction amount in the dashed line in Fig. 8(b)) corresponds to the period of the gradient on a negative side of the ideal heat generation rate waveform model (period on the delay angle side with respect to the peak position of the reaction).

The reaction of the fuel is conducted with the form described above, so that the ideal heat generation rate waveform model can be approximated as the triangle (isosceles triangle).

The procedure of the production of the ideal heat generation rate waveform model for each reaction form of the fuel has been described above.

(1-C) Production of Ideal Heat Generation Rate Waveform Through Filtering of Ideal Heat Generation Rate Waveform Model

As described above, after the ideal heat generation rate waveform model is produced, the ideal heat generation rate waveform model is smoothed through the well-known filter processing, thereby producing the ideal heat generation rate waveform.

Fig. 9 illustrates the ideal heat generation rate waveform model (isosceles triangle corresponding to each reaction) in a case where the one-time fuel injection is performed. In Fig. 9, the ideal heat generation rate waveform model (isosceles triangle corresponding to each reaction) in a case where the gasification reaction, the low-temperature oxidation reaction, the thermal decomposition reaction, and each high-temperature oxidation reaction are sequentially performed by the one-time fuel injection is illustrated for the better understanding of the present invention. Specifically, in the diagram, I represents the ideal heat generation rate waveform model of the gasification reaction, and II represents the ideal heat generation rate waveform model of the low-temperature oxidation reaction, and III represents the ideal heat generation rate waveform model of the thermal decomposition reaction (thermal decomposition reaction as the endothermic reaction), and IV represents the ideal heat generation rate waveform model of the high-temperature oxidation reaction by the premixed combustion, and V represents the ideal heat generation rate waveform model of the high-temperature oxidation reaction by the diffusion combustion.

Also, Fig. 10 illustrates the ideal heat generation rate waveform that is obtained by smoothing the ideal heat generation rate waveform model through the filter processing. Thus, the ideal heat generation rate waveform model (isosceles triangle) corresponding to each reaction (the gasification reaction, the low-temperature oxidation reaction, the thermal decomposition reaction, and each high-temperature oxidation reaction) is smoothed through the filter processing, thereby producing the ideal heat generation rate waveform.

It is noted that the pilot injection and the after injection, and the like are performed in the actual engine 1 besides the main injection. Fig. 11 illustrates the ideal heat generation rate waveform model (waveform diagram in the upper section) and the fuel injection rate waveform (waveform diagram in the lower section) in a case where two-time pilot injection and one-time main injection, and one-time after injection are performed. Also, Fig. 12 illustrates the ideal heat generation rate waveform that is obtained by smoothing the ideal heat generation rate waveform model (upper section in Fig. 11) through the filter processing.

(2) Production of Actual Heat Generation Rate Waveform

The actual heat generation rate waveform, which is compared with the ideal heat generation rate waveform, is produced in accordance with the change of the in-cylinder pressure detected by the in-cylinder pressure sensor 4A. That is, there is a correlation between the heat generation rate in the cylinder and the in-cylinder pressure (the higher the heat generation rate is, the higher the in-cylinder pressure), so that the actual heat generation rate waveform can be produced based on the in-cylinder pressure detected by the in-cylinder pressure sensor 4A. The processing of producing the actual heat generation rate waveform based on the in-cylinder pressure detected is well known, and its description is omitted.

(3) Diagnosis of Combustion State by Comparing Ideal Heat Generation Rate Waveform with Actual Heat Generation Rate Waveform

The diagnosis on the combustion states (diagnosis of reaction forms) is performed based on the magnitude of the deviation of the actual heat generation rate waveform with respect to the ideal heat generation rate waveform. For example, when there exists a reaction form in which the deviation is equal to or higher than a threshold value set in advance (abnormality determining deviation amount in the present invention), it is diagnosed that the abnormality occurs in the reaction form. For example, when there exists a reaction form in which the deviation of the heat generation rate is equal to or higher than 10 [J/°CA], or when there exists a reaction form in which the deviation to the crank angle side of the actual heat generation rate waveform with respect to the ideal heat generation rate waveform (deviation of the advance angle side or the delay angle side) is equal to or higher than 3 °CA, it is diagnosed that the abnormality occurs in the reaction form. The values are not limited thereto, but appropriately set based on experiment or simulation.

For example, like the actual heat generation rate waveform illustrated by the dashed line in Fig. 13, when the actual heat generation rate waveform of each high-temperature oxidation reaction (the high-temperature oxidation reaction by the premixed combustion and the high-temperature oxidation reaction by the diffusion combustion) with respect to the ideal heat generation rate waveform illustrated in the solid line (the same waveform illustrated in Fig. 10) is deviated to the delay angle side, and its deviation exceeds the threshold value, the abnormality occurs in each high-temperature oxidation reaction. That is, it is diagnosed that the abnormality occurs at the reaction start time of each high-temperature oxidation reaction.

Also, like the actual heat generation rate waveform illustrated by the dashed-dotted line in Fig. 13, when the peak value of the heat generation rate waveform in each high-temperature oxidation reaction is high with respect to the ideal heat generation rate waveform illustrated by the solid line, and its deviation exceeds the threshold value, the abnormality occurs in each high-temperature oxidation reaction. That is, it is diagnosed that the abnormality occurs in terms of the reaction amount in each high-temperature oxidation reaction. Also, this diagnosis is not limited to the high-temperature oxidation reaction, but is similarly applied to the gasification reaction, the low-temperature oxidation reaction, and the thermal decomposition reaction respectively.

The parameters, which are used to diagnose whether or not the abnormality occurs with regards to the reaction form, are not limited to the above-described deviation (ignition delay and the like) of the reaction time or the deviation of the peak value of the heat generation rate waveform, but can be inclusive of the deviation of the reaction velocity, the deviation of the reaction period, the peak phase, and the like.

It is noted that Fig. 14 illustrates one example of the ideal heat generation rate waveform (waveform illustrated by the solid line in Fig. 14) which are illustrated in Fig. 12 above, and the actual heat generation rate waveform (waveform illustrated by the dashed line in Fig. 14). In this case as well, when the deviation of the actual heat generation rate waveform with respect to the ideal heat generation rate waveform is large, and the deviation exceeds a threshold value set in advance (abnormality determining deviation amount), it is diagnosed that the abnormality occurs in the fuel reaction.

(4) Correction of Control Parameter of Engine 1 Corresponding to Diagnosis Results

Regarding the diagnosis on the combustion state by means of comparison of the ideal heat generation rate waveform with the actual heat generation rate waveform, as described above, when there exists a reaction form in which the deviation of the actual heat generation rate waveform with respect to the ideal heat generation rate waveform exceeds the threshold value set in advance, it is diagnosed that the abnormality occurs in the fuel reaction, and the control parameter of the engine 1 is corrected in such a manner as to reduce the deviation.

For example, when the actual heat generation rate waveform is illustrated by the dashed line in Fig. 13, it is determined that the ignition delay of the fuel occurs, and that oxygen is in short supply, and the lack of oxygen is resolved by enhancing the cooling capacity of the intake of the intercooler 61, or decreasing the opening degree of the EGR valve 81 so as to reduce the EGR gas amount, or raising the supercharging ratio of the intake.

Also, when the actual heat generation rate waveform is illustrated by the dashed-dotted line in Fig. 13, it is determined that the reaction amount of the fuel is too large, and the correction of the reduction of the fuel injection amount, the correction of increase of the amount of the EGR gas, and the like are performed.

Also, when the actual heat generation rate waveform is illustrated by the dashed line in Fig. 14, it is determined that the in-cylinder temperature is not enough or that oxygen is in short supply, the supercharging ratio of the intake is raised, or the correction of the increase in the injection amount of the fuel that contributes to the preheating is performed.

Also, the control parameters, which bring the actual heat generation rate waveform near to the ideal heat generation rate waveform, may be inclusive of a fuel injection time, in-cylinder gas composition, an intake air amount (gas amount) and various learning values (learning values with regard to the fuel injection amount, the fuel injection time, and the like), besides the above-described parameters.

The correction of these control parameters is executed when it is possible to allow the actual heat generation rate waveform to approximately correspond to the ideal heat generation rate waveform by means of the correction of the control parameters. Specifically, the correction of the control parameters is executed when the deviation amount of the actual heat generation rate waveform with respect to the ideal heat generation rate waveform is equal to or lower than a predetermined correction possibility deviation amount. The correction possibility deviation amount is set in advance based on experiment or simulation. Then, when the deviation amount of the actual heat generation rate waveform with respect to the ideal heat generation rate waveform exceeds the correction possibility deviation amount, it means that the correction amount of the control parameter exceeds a predetermined guard value, whereby it is diagnosed that failure occurs in part of apparatuses constituting the engine 1. Specifically, when respective lower values of the in-cylinder temperature, the oxygen density, and the fuel density are set in advance, and any of the in-cylinder temperature, the oxygen density, and the fuel density is less than its lower value, it is determined that the correction amount of the control parameter of the engine 1 exceeds the predetermined guard value, and it is diagnosed that failure occurs in the engine 1.

In this case, for example, without the correction of the control parameter, MIL (warning lamp) on a meter panel is lighted up in the vehicle compartment so as to direct the driver's attention to caution, and abnormality information is written into Diagnosis provided in the ECU 100.

As described above, in the present embodiment, when the actual heat generation rate waveform is deviated from the ideal heat generation rate waveform by the predetermined amount or more regarding the respective plurality of reaction forms of the fuel, it can be diagnosed that abnormality occurs in the reaction form. That is, each reaction form is separately handled, and the presence or absence of abnormality can be respectively diagnosed. Accordingly, the reaction form in which the abnormality occurs can be identified with high accuracy, thereby achieving the improvement of the accuracy in terms of diagnosis. Then, remedial measures (correction of control parameter) are taken for the reaction form that is diagnosed as having abnormality (when the deviation is equal to or lower than the predetermined correction possibility deviation amount), so that it is possible to correct an optimal control parameter to normalize the reaction state of the reaction form, thereby performing effective correction operation. Consequently, this makes it possible to bring the whole of each reaction of the fuel near to the ideal reaction (bring the actual heat generation rate waveform of each fuel near to the ideal heat generation rate waveform), so that the controllability of the engine 1 can be substantially improved.

Also, when it is diagnosed that abnormality occurs in the reaction, it is determined whether or not the abnormality can be resolved based on the deviation amount of the actual heat generation rate waveform with respect to the ideal heat generation rate waveform, which makes it possible to precisely discriminate a state where a normal reaction state is obtained by means of the correction of the control parameter from a state where maintenance such as replacement of components is required.

(Modified Example)

Next, a modified example will be described. In the above-described present embodiment, the diagnosis of each reaction form is respectively conducted by comparing the actual heat generation rate waveform with the ideal heat generation rate waveform that is obtained by performing the filter processing for the ideal heat generation rate waveform model approximated as the triangle.

In the modified example, in place of it, the diagnosis of each reaction form is respectively conducted by comparing the ideal heat generation rate waveform model with the actual heat generation rate waveform. The method of producing the ideal heat generation rate waveform model and the actual heat generation rate waveform in the modified example is similar to that of the above-described embodiment.

Hereinafter, the modified example will be specifically described along with Fig. 15. In Fig. 15, the ideal heat generation rate waveform model of one reaction form (for example, the low-temperature oxidation reaction) is illustrated by the solid line, and the actual heat generation rate waveform of the actual reaction form (for example, actual low-temperature oxidation reaction) is illustrated by the dashed line.

Fig. 15(a) illustrates a case where the actual heat generation rate waveform approximately corresponds to the ideal heat generation rate waveform model, that is, illustrates a state where the reaction start time, the reaction velocity, the reaction amount, the reaction period, the gravity phase of the reaction of the actual heat generation rate waveform approximately correspond to those of the ideal heat generation rate waveform model respectively, and an ideal reaction is obtained.

In contrast, Fig. 15(b) illustrates a state where the reaction velocity, the gravity phase of the reaction, and the reaction period of the actual heat generation rate waveform are respectively deviated from those of the ideal heat generation rate waveform model. In the diagram, d1 represents the deviation amount of the reaction velocity, and d2 in the diagram represents the deviation amount of the gravity phase of the reaction, and d3 in the diagram represents the deviation amount of the reaction period, respectively. In the actual heat generation rate waveform illustrated in Fig. 15(b), the reaction velocity is low, and the gravity phase is shifted to the delay angle side, and the reaction period is long, with respect to the ideal heat generation rate waveform model.

Also, Fig. 15(c) illustrates a state where the reaction start time and the gravity phase of the reaction of the actual heat generation rate waveform are respectively deviated from those of the ideal heat generation rate waveform model. In the diagram, d4 represents the deviation amount of the reaction start time, and d5 in the diagram represents the deviation amount of the gravity phase of the reaction respectively. In the actual heat generation rate waveform illustrated in Fig. 15(c), the reaction start time is shifted to the delay angle side, and the gravity phase of the reaction is also shifted to the delay angle side, with respect to the ideal heat generation rate waveform model.

Also, Fig. 15(d) illustrates a state where the reaction amount of the actual heat generation rate waveform is deviated from that of the ideal heat generation rate waveform model.

Thus, respective deviation amounts of the reaction start time, the reaction velocity, the reaction amount, the reaction period, and the gravity phase of the reaction are obtained, and when the deviation amount is equal to or higher than the predetermined amount (abnormality determining deviation amount), it is diagnosed that abnormality occurs in the reaction (low-temperature oxidation reaction), and moreover, when the deviation amount is equal to or higher than the abnormality determining deviation amount and equal to or lower than the predetermined correction possibility deviation amount, the control parameter of the engine 1 is corrected in such a manner as to reduce the deviation amount.

For example, in the case of the waveform illustrated in Fig. 15(b), the control of the supply pump 21 is performed by increasing the fuel injection pressure (common rail pressure) in such a manner that the reaction velocity of the actual heat generation rate waveform is increased and brought close to the reaction velocity of the ideal heat generation rate waveform model. Also, in the case of the waveform illustrated in Fig. 15(c), the control of resolving the ignition delay of the fuel (for example, the reduction of the EGR gas amount, the increase of the supercharging ratio of the intake, or the like) is performed. Also, in the case of the waveform illustrated in Fig. 15(d), the correction of an increase in the amount of the fuel is performed.

Also, when the deviation amount exceeds the correction possibility deviation amount, it is determined that failure occurs in the engine 1, for example, without the correction of the control parameter, MIL (warning lamp) on a meter panel is lighted up in the vehicle compartment so as to direct the driver's attention to caution, and abnormality information is written into Diagnosis provided in the ECU 100.

According to the modified example, the diagnosis, in which the ideal heat generation rate waveform model is used, is performed, so that the processes of performing the filter processing for the ideal heat generation rate waveform model and producing the ideal heat generation rate waveform can be eliminated. Accordingly, the simplification of processing operations can be achieved, and processing load on the ECU 100 can be alleviated.

-Other Embodiment-

The present embodiment above describes a case where the present invention is applied to the inline four-cylinder diesel engine 1 installed in an automobile. The present invention is not limited to the automobile but can be applied to engines that are used for various purposes. Also, the number of cylinders and types of engines (inline-type engines, V-type engines, horizontally opposed engines, and the like) are in particular not limited.

Also, in the present embodiment, the combustion state diagnostic apparatus according to the present invention is stored in the ROM (mounted on a vehicle) of the ECU 100 installed on a vehicle, and the diagnosis on the combustion state is performed in the operating state of the engine 1. The present invention is not limited thereto, but may be applied to mode of use, wherein the combustion state diagnostic apparatus is provided in an experimental apparatus (engine bench tester), and the diagnosis on the combustion state is performed at the design phase of the engine 1 when the test run of the engine 1 is conducted on the experimental apparatus, and the appropriate value of the control parameter is obtained.

Also, the present embodiments describe the engine 1 employing the piezo injector 23 that turns into a full-open valve state only during an energized period so as to change the fuel injection rate. The present invention can also be applied to engines employing variable injection rate injectors.

[Industrial Applicability]

The present invention can be applicable to diagnosis of each reaction of fuel regarding a diesel engine installed in an automobile.

[Reference Signs List]

1 Engine (Internal combustion engine)
12 Cylinder bore
23 Injector (Fuel injection valve)
3 Combustion chamber
4A In-cylinder pressure sensor
100 ECU
I ideal heat generation rate waveform model of gasification reaction
II ideal heat generation rate waveform model of low-temperature oxidation reaction
III ideal heat generation rate waveform model of thermal decomposition reaction
IV ideal heat generation rate waveform model of high-temperature oxidation reaction by premixed combustion
V ideal heat generation rate waveform model of high-temperature oxidation reaction by diffusion combustion

**Claims**

1. A combustion state diagnostic apparatus configured to diagnose a combustion state of fuel in a compression self-igniting internal combustion engine (1) that is configured to carry out combustion by self-ignition of the fuel injected from a fuel injection valve into a cylinder, the combustion state diagnostic apparatus of the internal combustion engine comprising:

   wherein it is configured that a reaction velocity, a reaction amount, and a reaction period of a respective plurality of reactions of the fuel injected into the cylinder are calculated in accordance with an in-cylinder environment, and an ideal heat generation rate waveform model, or an ideal heat generation rate waveform produced by performing filter processing for the ideal heat generation rate waveform model, with regard to each reaction, is respectively obtained, and the ideal heat generation rate waveform model or the ideal heat generation rate waveform with regard to each reaction is respectively compared with an actual heat generation rate waveform of a case where the fuel is actually reacted in the cylinder, and when there exists a reaction in which deviation of the actual heat generation rate waveform with respect to the ideal heat generation rate waveform model or the ideal heat generation rate waveform is equal to or higher than a predetermined amount, it is diagnosed that abnormality occurs in the reaction;
   wherein the respective plurality of reactions of the fuel are a gasification reaction, a low-temperature oxidation reaction, a thermal decomposition reaction, and a high-temperature oxidation reaction, and in each of the respective reactions, it is configured to compare the ideal heat generation rate waveform model or the ideal heat generation rate waveform with the actual heat generation rate waveform and diagnose the abnormality of the reaction;
   wherein a reaction start temperature is set as a reaction starting point of each of the respective reactions, and a time point when an in-cylinder temperature reaches the reaction start temperature is set as a start time of the reaction; and
   wherein the ideal heat generation rate waveform model is produced by being approximated as a triangle in which the start time of each reaction is provided as a reference point, and a gradient of an oblique side represents the reaction velocity, and an area represents the reaction amount, and a length of a base represents the reaction period.

2. The combustion state diagnostic apparatus of the internal combustion engine according to claim 1,
   wherein it is configured that the reaction velocity is calculated based on a reference reaction velocity efficiency and a fuel amount corresponding to the reaction start temperature at the start time of the reaction, and
   wherein it is configured that the reaction amount is calculated based on a reference reaction amount efficiency and the fuel amount corresponding to the reaction start temperature, and
   wherein it is configured that the reaction period is calculated based on the reaction velocity and the reaction amount.

3. The combustion state diagnostic apparatus of the internal combustion engine according to claim 2,
   wherein the reaction velocity is obtained by multiplying a reference reaction velocity, which is obtained by multiplying the reference reaction velocity efficiency by the fuel amount, by a revolution speed correction coefficient corresponding to an engine revolution speed, and
   wherein the revolution speed correction coefficient is given by (reference revolution speed / actual revolution speed)$^2$.

4. The combustion state diagnostic apparatus of the internal combustion engine according to any one of claims 1 to 3,
   wherein the actual heat generation rate waveform is obtained based on in-cylinder pressure detected by an in-cylinder pressure sensor (4A).

5. The combustion state diagnostic apparatus of the internal combustion engine according to any one of claims 1 to 4,
   wherein the ideal heat generation rate waveform is produced based on the ideal heat generation rate waveform model made up of a triangle, in which the start time of each reaction is provided as a reference point, and a gradient of an oblique side represents the reaction velocity, and an area represents the reaction amount, and a length of the base represents the reaction period, and produced by smoothing the ideal heat generation rate waveform model of each reaction by means of the filter processing.

6. The combustion state diagnostic apparatus of the internal combustion engine according to claim 1,
   wherein it is configured that the high-temperature oxidation reaction is separated into a high-temperature oxidation reaction by premixed combustion and a high-temperature oxidation reaction by diffusion combustion in accordance with the reaction velocity, and the ideal heat generation rate waveform model or the ideal heat generation rate waveform is compared with the actual heat generation rate waveform, with regard to the high-temperature oxidation reaction by the premixed combustion and the high-temperature oxidation reaction by the diffusion combustion respectively, thereby performing the diagnosis on the abnormality of the reaction.

7. The combustion state diagnostic apparatus of the internal combustion engine according to any one of claims 1 to 6,
   wherein, in a case where there exists the reaction in which the deviation of the actual heat generation rate waveform with respect to the ideal heat generation rate waveform model or the ideal heat generation rate waveform is equal to or higher than a predetermined abnormality determining deviation amount, and it is diagnosed that abnormality occurs in the reaction, when the deviation of the actual heat generation rate waveform with respect to the ideal heat generation rate waveform model or the ideal heat generation rate waveform is equal to or lower than a predetermined correction possibility deviation amount, a control parameter of the internal combustion engine is corrected, thereby performing control that the deviation is reduced less than the abnormality determining deviation amount, in contrast, when the deviation of the actual heat generation rate waveform with respect to the ideal heat generation rate waveform model or the ideal heat generation rate waveform exceeds the correction possibility deviation amount, it is diagnosed that failure occurs in the internal combustion engine.

8. The combustion state diagnostic apparatus of the internal combustion engine according to any one of claims 1 to 7,
   wherein the combustion state diagnostic apparatus of the internal combustion engine is mounted in a vehicle or installed in an experimental apparatus.

**Patentansprüche**

1. Verbrennungszustandsdiagnosevorrichtung, die so konfiguriert ist, dass sie einen Verbrennungszustand eines Kraftstoffs in einer Kompressionszündungs-Verbrennungskraftmaschine (1) diagnostiziert, die so konfiguriert ist, dass sie eine Verbrennung durch Selbstzündung des Kraftstoffs durchführt, der von einem Kraftstoffeinspritzventil in einen Zylinder eingespritzt wird, wobei die Verbrennungszustandsdiagnosevorrichtung der Verbrennungskraftmaschine aufweist:

wobei sie so konfiguriert ist, dass eine Reaktionsgeschwindigkeit, eine Reaktionsmenge und eine Reaktionsperiode einer jeweiligen Mehrzahl an Reaktionen des Kraftstoffs, der in den Zylinder eingespritzt wird, in Übereinstimmung mit einer Innenzylinderumgebung berechnet werden, und ein Idealwärmeerzeugungsratenwellenformmodell, oder eine Idealwärmeerzeugungsratenwellenform, die dadurch erzeugt wird, indem eine Filterbearbeitung für das Idealwärmeerzeugungsratenwellenformmodell in Bezug auf jede Reaktion durchgeführt wird, jeweils erhalten wird, und wobei das Idealwärmeerzeugungsratenwellenformmodell oder die Idealwärmeerzeugungsratenwellenform in Bezug auf jede Reaktion jeweils mit einer tatsächlichen Wärmeerzeugungsratenwellenform in einem Fall verglichen wird, bei dem der Kraftstoff tatsächlich in dem Zylinder reagiert wird, und wenn eine Reaktion existiert, bei der eine Abweichung der tatsächlichen Wärmeerzeugungsratenwellenform in Bezug auf das Idealwärmeerzeugungsratenwellenformmodell oder die Idealwärmeerzeugungsratenwellenform einer vorgegebenen Menge gleicht oder höher als diese ist, diagnostiziert wird, dass eine Störung in der Reaktion vorliegt;

wobei die jeweilige Mehrzahl an Reaktionen des Kraftstoffs eine Vergasungsreaktion, eine Niedrigtemperaturoxidationsreaktion, eine thermale Zerfallsreaktion, und eine Hochtemperaturoxidationsreaktion sind, und wobei bei jeder der jeweiligen Reaktionen das Idealwärmeerzeugungsratenwellenformmodell oder die Idealwärmeerzeugungsratenwellenform mit der tatsächlichen Wärmeerzeugungsratenwellenform verglichen wird und die Störung der Reaktion diagnostiziert wird;

wobei eine Reaktionsstarttemperatur als ein Reaktionsstartpunkt von jeder der jeweiligen Reaktionen eingestellt wird, und ein Zeitpunkt, an dem eine Innenzylindertemperatur die Reaktionsstarttemperatur erreicht, als eine Startzeit der Reaktion eingestellt wird; und

wobei das Idealwärmeerzeugungsratenwellenformmodell dadurch erzeugt wird, indem es als ein Dreieck angenähert wird, in dem die Startzeit jeder Reaktion als ein Referenzpunkt vorhanden ist und ein Gradient einer schrägen Seite die Reaktionsgeschwindigkeit darstellt und eine Fläche die Reaktionsmenge darstellt und eine Länge einer Basis die Reaktionsperiode darstellt.

2.  Verbrennungszustandsdiagnosevorrichtung der Verbrennungskraftmaschine nach Anspruch 1,
    wobei sie so konfiguriert ist, dass die Reaktionsgeschwindigkeit auf Basis einer Referenzreaktionsgeschwindigkeitseffizienz und einer Kraftstoffmenge berechnet wird, die der Reaktionsstarttemperatur zu der Startzeit der Reaktion entspricht, und
    wobei sie so konfiguriert ist, dass die Reaktionsmenge auf Basis einer Referenzreaktionsmengeneffizienz und der Kraftstoffmenge berechnet wird, die der Reaktionsstarttemperatur entspricht, und
    wobei sie so konfiguriert ist, dass die Reaktionsperiode auf Basis der Reaktionsgeschwindigkeit und der Reaktionsmenge berechnet wird.

3.  Verbrennungszustandsdiagnosevorrichtung der Verbrennungskraftmaschine nach Anspruch 2,
    wobei die Reaktionsgeschwindigkeit erhalten wird, indem eine Referenzreaktionsgeschwindigkeit, die erhalten wird, indem die Referenzreaktionsgeschwindigkeitseffizienz mit der Kraftstoffmenge multipliziert wird, mit einem Drehzahlkorrekturkoeffizienten multipliziert wird, der einer Maschinendrehzahl entspricht, und
    wobei der Drehzahlkorrekturkoeffizient durch (Referenzdrehzahl / tatsächliche Drehzahl)$^2$ erhalten wird.

4.  Verbrennungszustandsdiagnosevorrichtung der Verbrennungskraftmaschine nach einem der Ansprüche 1 bis 3,
    wobei die tatsächliche Wärmeerzeugungsratenwellenform auf Basis eines Innenzylinderdrucks erhalten wird, der durch einen Innenzylinderdrucksensor (4A) erfasst wird.

5.  Verbrennungszustandsdiagnosevorrichtung der Verbrennungskraftmaschine nach einem der Ansprüche 1 bis 4,
    wobei die Idealwärmeerzeugungsratenwellenform auf Basis des Idealwärmeerzeugungsratenwellenformmodells erzeugt wird, das aus einem Dreieck besteht, in dem die Startzeit jeder Reaktion als Referenzpunkt vorhanden ist, und ein Gradient einer schrägen Seite die Reaktionsgeschwindigkeit darstellt, und eine Fläche die Reaktionsmenge darstellt und eine Länge der Basis die Reaktionsperiode darstellt, und durch Glätten des Idealwärmeerzeugungsratenwellenformmodells jeder Reaktion durch die Filterbearbeitung erzeugt wird.

6.  Verbrennungszustandsdiagnosevorrichtung der Verbrennungskraftmaschine nach Anspruch 1,
    wobei sie so konfiguriert ist, dass die Hochtemperaturoxidationsreaktion in eine Hochtemperaturoxidationsreaktion durch vorgemischte Verbrennung und eine Hochtemperaturoxidationsreaktion durch Diffusionsverbrennung in Übereinstimmung mit der Reaktionsgeschwindigkeit aufgeteilt wird, und wobei das Idealwärmeerzeugungsratenwellenformmodell oder die Idealwärmeerzeugungsratenwellenform mit der tatsächlichen Wärmeerzeugungsratenwellenform im Hinblick auf die Hochtemperaturoxidationsreaktion durch die vorgemischte Verbrennung und die Hochtemperaturoxidationsreaktion durch die Diffusionsverbrennung verglichen wird, wodurch die Diagnose betreffend die Störung der Reaktion durchgeführt wird.

7. Verbrennungszustandsdiagnosevorrichtung der Verbrennungskraftmaschine nach einem der Ansprüche 1 bis 6, wobei, in einem Fall, bei dem die Reaktion existiert, bei der die Abweichung der tatsächlichen Wärmeerzeugungsratenwellenform in Bezug auf das Idealwärmeerzeugungsratenwellenformmodell oder die Idealwärmeerzeugungsratenwellenform einer vorgegebenen Störungsbestimmungsabweichungsmenge gleicht oder höher als diese ist, und diagnostiziert wird, dass eine Störung in der Reaktion vorliegt, wenn die Abweichung der tatsächlichen Wärmeerzeugungsratenwellenform in Bezug auf das Idealwärmeerzeugungsratenwellenformmodell oder die Idealwärmeerzeugungsratenwellenform einer vorgegebenen Korrekturmöglichkeitsabweichungsmenge gleicht oder niedriger als diese ist, ein Steuerparameter der Verbrennungskraftmaschine korrigiert wird, wodurch eine Steuerung durchgeführt wird, dass die Abweichung um weniger reduziert wird als die Störungsbestimmungsabweichungsmenge, und wobei im Gegensatz dazu, wenn die Abweichung der tatsächlichen Wärmeerzeugungsratenwellenform in Bezug auf das Idealwärmeerzeugungsratenwellenformmodell oder die Idealwärmeerzeugungsratenwellenform die Korrekturmöglichkeitsabweichungsmenge übersteigt, diagnostiziert wird, dass in der Verbrennungskraftmaschine eine Störung vorliegt.

8. Verbrennungszustandsdiagnosevorrichtung der Verbrennungskraftmaschine nach einem der Ansprüche 1 bis 7, wobei die Verbrennungszustandsdiagnosevorrichtung der Verbrennungskraftmaschine in einem Fahrzeug montiert oder in einer Experimentalvorrichtung installiert ist.

## Revendications

1. Appareil de diagnostic d'état de combustion configuré pour diagnostiquer un état de combustion d'un carburant dans un moteur à combustion interne à auto-allumage par compression (1) qui est configuré pour mettre en oeuvre une combustion par auto-allumage du carburant injecté depuis une soupape d'injection de carburant jusque dans un cylindre, l'appareil de diagnostic d'état de combustion du moteur à combustion interne comprenant :

   dans lequel il est configuré qu'une vitesse de réaction, une grandeur de réaction et une période de réaction d'une pluralité respective de réactions du carburant injecté dans le cylindre sont calculées en fonction d'un environnement interne au cylindre, et un modèle de forme d'onde idéale de débit calorifique ou une forme d'onde idéale de débit calorifique produite en réalisant un traitement par filtre pour le modèle de forme d'onde idéale de débit calorifique, au regard de chaque réaction, est respectivement obtenu(e), et le modèle de forme d'onde idéale de débit calorifique ou la forme d'onde idéale de débit calorifique au regard de chaque réaction est respectivement comparé(e) à une forme d'onde en cours de débit calorifique d'un cas où le carburant est effectivement mis à réagir dans le cylindre, et lorsqu'il existe une réaction dans laquelle un écart de la forme d'onde en cours de débit calorifique par rapport au modèle de forme d'onde idéale de débit calorifique ou à la forme d'onde idéale de débit calorifique est égal ou supérieur à une grandeur prédéterminée, on diagnostique la survenue d'une anomalie dans la réaction ;
   dans lequel la pluralité respective de réactions du carburant sont une réaction de gazéification, une réaction d'oxydation à basse température, une réaction de décomposition thermique et une réaction d'oxydation à haute température, et dans chacune des réactions respectives, il est configuré pour comparer le modèle de forme d'onde idéale de débit calorifique ou la forme d'onde idéale de débit calorifique à la forme d'onde en cours de débit calorifique et diagnostiquer l'anomalie de la réaction ;
   dans lequel une température de début de réaction est définie comme un point de départ de réaction de chacune des réactions respectives, et un point dans le temps lorsqu'une température interne au cylindre atteint la température de début de réaction est défini comme un temps de départ de la réaction ; et
   dans lequel le modèle de forme d'onde idéale de débit calorifique est produit en étant approximativement un triangle dans lequel le temps de départ de chaque réaction est fourni en tant que point de référence et un gradient d'un côté oblique représente la vitesse de réaction et une zone représente la grandeur de réaction et une longueur d'une base représente la période de réaction.

2. Appareil de diagnostic d'état de combustion du moteur à combustion interne selon la revendication 1, dans lequel il est configuré que la vitesse de réaction est calculée sur la base d'une efficacité de vitesse de réaction de référence et d'une quantité de carburant correspondant à la température de début de réaction au temps de départ de la réaction, et dans lequel il est configuré que la grandeur de réaction est calculée sur la base d'une efficacité de grandeur de réaction de référence et de la quantité de carburant correspondant à la température de début de réaction, et

dans lequel il est configuré que la période de réaction est calculée sur la base de la vitesse de réaction et de la grandeur de réaction.

3. Appareil de diagnostic d'état de combustion du moteur à combustion interne selon la revendication 2, dans lequel la vitesse de réaction est obtenue en multipliant une vitesse de réaction de référence, qui est obtenue en multipliant l'efficacité de vitesse de réaction de référence par la quantité de carburant, par un coefficient de correction de vitesse de rotation correspondant à une vitesse de rotation de moteur, et dans lequel le coefficient de correction de vitesse de rotation est donné par (vitesse de rotation de référence / vitesse de rotation en cours)$^2$.

4. Appareil de diagnostic d'état de combustion du moteur à combustion interne selon l'une quelconque des revendications 1 à 3, dans lequel la forme d'onde en cours de débit calorifique est obtenue sur la base d'une pression interne au cylindre détectée par un capteur de pression interne au cylindre (4A).

5. Appareil de diagnostic d'état de combustion du moteur à combustion interne selon l'une quelconque des revendications 1 à 4, dans lequel la forme d'onde idéale de débit calorifique est produite sur la base du modèle de forme d'onde idéale de débit calorifique constitué d'un triangle, dans lequel le temps de départ de chaque réaction est fourni en tant que point de référence et un gradient d'un côté oblique représente la vitesse de réaction et une zone représente la grandeur de réaction et une longueur de la base représente la période de réaction, et produite en lissant le modèle de forme d'onde idéale de débit calorifique de chaque réaction au moyen du traitement par filtre.

6. Appareil de diagnostic d'état de combustion du moteur à combustion interne selon la revendication 1, dans lequel il est configuré que la réaction d'oxydation à haute température est séparée en une réaction d'oxydation à haute température par combustion à prémélange et une réaction d'oxydation à haute température par combustion de diffusion en fonction de la vitesse de réaction, et le modèle de forme d'onde idéale de débit calorifique ou la forme d'onde idéale de débit calorifique est comparé(e) à la forme d'onde en cours de débit calorifique, au regard de la réaction d'oxydation à haute température par la combustion à prémélange et de la réaction d'oxydation à haute température par la combustion de diffusion respectivement, réalisant ainsi le diagnostic de l'anomalie de la réaction.

7. Appareil de diagnostic d'état de combustion du moteur à combustion interne selon l'une quelconque des revendications 1 à 6, dans lequel, dans un cas où il existe la réaction dans laquelle l'écart de la forme d'onde en cours de débit calorifique par rapport au modèle de forme d'onde idéale de débit calorifique ou à la forme d'onde idéale de débit calorifique est égal ou supérieur à une grandeur d'écart prédéterminée déterminant une anomalie et on diagnostique la survenue d'une anomalie dans la réaction, lorsque l'écart de la forme d'onde en cours de débit calorifique par rapport au modèle de forme d'onde idéale de débit calorifique ou à la forme d'onde idéale de débit calorifique est égal ou inférieur à une grandeur d'écart prédéterminée de possibilité de correction, un paramètre de vérification du moteur à combustion interne est corrigé, réalisant ainsi une vérification comme quoi l'écart est réduit en dessous de la grandeur d'écart déterminant l'anomalie, par contraste, lorsque l'écart de la forme d'onde en cours de débit calorifique par rapport au modèle de forme d'onde idéale de débit calorifique ou à la forme d'onde idéale de débit calorifique dépasse la grandeur d'écart de possibilité de correction, on diagnostique la survenue d'une erreur dans le moteur à combustion interne.

8. Appareil de diagnostic d'état de combustion du moteur à combustion interne selon l'une quelconque des revendications 1 à 7, dans lequel l'appareil de diagnostic d'état de combustion du moteur à combustion interne est monté dans un véhicule ou installé dans un appareil expérimental.

Fig.1

**Fig.2**

Fig.3

```
 40 ─── CRANK POSITION SENSOR          ───→ ┌─────┐  ───→ SUPPLY PUMP        ─── 21
 41 ─── RAIL PRESSURE SENSOR           ───→ │     │
 42 ─── THROTTLE OPENING DEGREE SENSOR ───→ │     │  ───→ INJECTOR           ─── 23
 43 ─── AIRFLOW METER                  ───→ │     │
44a,44b ─ A/F SENSOR                   ───→ │     │  ───→ VARIABLE NOZZLE    ─── 54
45a,45b ─ EXHAUST TEMPERATURE SENSOR   ───→ │ ECU │       VANE MECHANISM
 46 ─── WATER TEMPERATURE SENSOR       ───→ │     │
 47 ─── ACCELERATOR OPENING DEGREE SENSOR→  │     │  ───→ INTAKE THROTTLE VALVE ─ 62
 48 ─── INTAKE PRESSURE SENSOR         ───→ │     │
 49 ─── INTAKE TEMPERATURE SENSOR      ───→ │     │  ───→ EGR VALVE           ─── 81
 4A ─── IN-CYLINDER PRESSURE SENSOR    ───→ └─────┘
```

100

Fig.4

HEAT GENERATION RATE

α

HEAT GENERATION RATE
WAVEFORM IN MAIN
INJECTION

HEAT GENERATION RATE
WAVEFORM IN PILOT
INJECTION

β

TDC   ATDC10°
(COMBUSTION CENTER
OF GRAVITY)

CRANK ANGLE

FUEL INJECTION RATE

MAIN INJECTION

PILOT INJECTION

TDC        T1        CRANK ANGLE

## Fig.5

```
        ┌─────────────────────────────────┐
        │   COMBUSTION STATE DIAGNOSIS,    │
        │  CONTROL PARAMETER CORRECTION    │
        └─────────────────────────────────┘
                          │
                          ▼
(1)     ┌─────────────────────────────────┐
        │      PRODUCTION OF IDEAL HEAT    │
        │    GENERATION RATE WAVEFORM      │
        └─────────────────────────────────┘
                          │
                          ▼
(2)     ┌─────────────────────────────────┐
        │     PRODUCTION OF ACTUAL HEAT    │
        │    GENERATION RATE WAVEFORM      │
        └─────────────────────────────────┘
                          │
                          ▼
(3)     ┌─────────────────────────────────┐
        │    COMBUSTION STATE DIAGNOSIS    │
        └─────────────────────────────────┘
                          │
                          ▼
(4)     ┌─────────────────────────────────┐
        │   CONTROL PARAMETER CORRECTION   │
        └─────────────────────────────────┘
                          │
                          ▼
        ┌─────────────────────────────────┐
        │             E N D                │
        └─────────────────────────────────┘
```

Fig.6

REVOLUTION SPEED
CORRECTION COEFFICIENT

1

2000

ENGINE REVOLUTION SPEED    (rpm)

Fig.7

(a)

AREA: S

G      αG:(α=1)

H

A | B(=A)

L

(b)

AREA: S

G      αG

H

A | B

L

Fig.8

Fig.9

IDEAL HEAT GENERATION
RATE WAVEFORM MODEL

Fig.10

IDEAL HEAT GENERATION
RATE WAVEFORM

Fig.11

Fig.12

Fig.13

Fig.14

## Fig.15

(a)

IDEAL HEAT GENERATION
RATE WAVEFORM MODEL

ACTUAL HEAT GENERATION
RATE WAVEFORM

CRANK ANGLE ⟶

(b)

$d2$

IDEAL HEAT GENERATION
RATE WAVEFORM MODEL

$d1$

ACTUAL HEAT GENERATION
RATE WAVEFORM

$d3$

CRANK ANGLE ⟶

(c)

$d5$

IDEAL HEAT GENERATION
RATE WAVEFORM MODEL

ACTUAL HEAT GENERATION
RATE WAVEFORM

$d4$

CRANK ANGLE ⟶

(d)

IDEAL HEAT GENERATION
RATE WAVEFORM MODEL

ACTUAL HEAT GENERATION
RATE WAVEFORM

CRANK ANGLE ⟶

**EP 2 860 380 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2008101591 A
- EP 1936156 A1